(19) **Europäisches Patentamt**
**European Patent Office**
**Office européen des brevets**

(11) **EP 3 080 558 B1**

(12) **EUROPEAN PATENT SPECIFICATION**

(45) Date of publication and mention
of the grant of the patent:
**08.04.2020  Bulletin 2020/15**

(51) Int Cl.:
***G01F 1/66*** *(2006.01)*    ***E21B 43/119*** *(2006.01)*
***E21B 47/10*** *(2012.01)*    ***E21B 47/12*** *(2012.01)*
***G01N 29/22*** *(2006.01)*    ***G01N 29/26*** *(2006.01)*

(21) Application number: **13818026.0**

(22) Date of filing: **09.12.2013**

(86) International application number:
**PCT/NO2013/000056**

(87) International publication number:
**WO 2015/088351 (18.06.2015 Gazette 2015/24)**

(54) **PULSE-WAVE ULTRASOUND PRODUCTION WELL LOGGING METHOD AND TOOL**

VERFAHREN UND WERKZEUG ZUR ÖLQUELLENMESSUNG MIT
IMPULSWELLEN-ULTRASCHALL

PROCÉDÉ ET OUTIL DE DIAGRAPHIE DE PUITS À PRODUCTION D'ULTRASONS À ONDE
PULSÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2016  Bulletin 2016/42**

(73) Proprietor: **Bergen Technology Center AS
5160 Laksevag (NO)**

(72) Inventors:
• **GRØNSBERG, Sondre
  N-5005 Bergen (NO)**
• **FRANTZEN, Dag-Håkon
  N-5176 Loddefjord (NO)**

(74) Representative: **Acapo AS
P.O. Box 1880 Nordnes
5817 Bergen (NO)**

(56) References cited:
**WO-A1-2010/151136    US-A- 3 409 869**

**EP 3 080 558 B1**

## Description

### Introduction

The present invention is a combined ultrasound imaging and Doppler wireline logging sonde tool. More specifically the present invention is a wireline logging apparatus serving a dual purpose: A first purpose is ultrasound imaging of the production pipe wall in a petroleum production well or the like. A second purpose is conducting Doppler measurements of flow velocities of fluids in the well, particularly for measuring flow velocities in the annulus fluid surrounding the production pipe. The logging sonde may be controlled from the surface to switch between the above operation modes.

### Background art

An overview of ultrasonic sonde setup is described in NASA preferred reliability practices, Practice NO. PT-TE-1422, "Ultrasonic testing of aerospace materials", pp. 1-3. The document presents

> 1) the pulse-echo method wherein the ultrasonic transmitter and receiver are combined and placed at one side of the subject to be tested,
> 2) the through-transmission method wherein the ultrasonic transmitter and the corresponding receiver are placed at opposite sides of the subject material to be tested, and
> 3) the pitch-catch method, wherein the ultrasonic transmitter and the corresponding receiver are placed at the same surface of the material to be tested, whereby the ultrasonic energy is transmitted at an angle and received at an angle. By these three transmitter-receiver setups, internal flaws may be found.

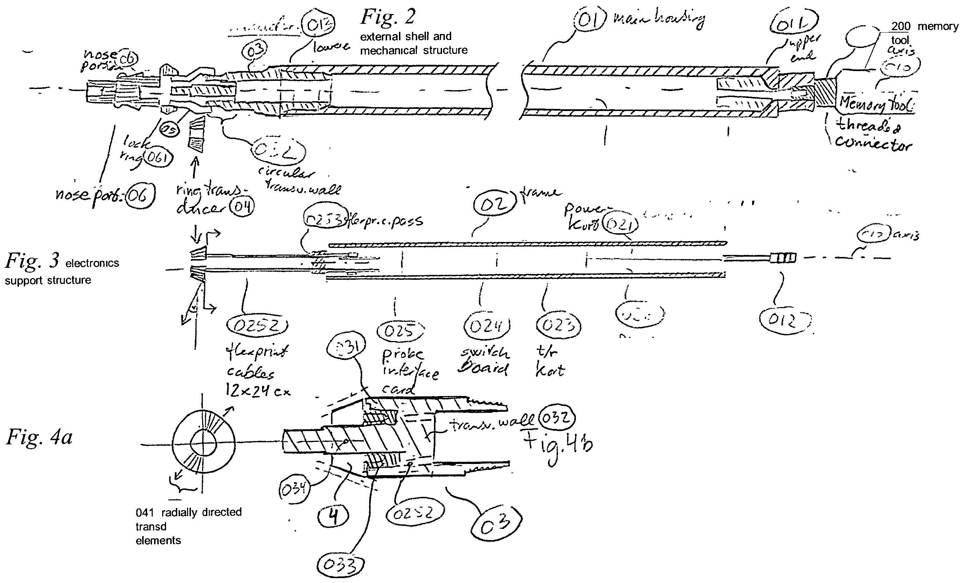

US4947683 Minear et al., "Pulsed ultrasonic Doppler borehole fluid measuring apparatus", published 14.08.1990, describes a logging sonde for use in a producing well, including centralizers to center the sonde to make an annular flow around it within the producing channel. The logging sonde comprises an ultrasonic transmitter/receiver which is mounted at the lower portion of the sonde for transmitting downwards and with an angle off the vertical axis of the sonde and the borehole, please see its Fig. 2. The transmitter/receiver mount is rotated about the vertical axis of the sonde in order for the transmitter / receiver to sweep out a conical surface through the upwelling fluid in the borehole. Material inhomogeneities such as gas bubbles form reflective interfaces in the fluid flow which scatter ultrasonic pulses so that a return pulse is formed. The transmitter transmits short ultrasound bursts at a repetition rate, and has several time gates for receiving backscattered reflections from gas bubbles, sediment particles or droplets in the relevant distance range within the production fluid flow. Doppler shift in the return pulses due to the inclusions' vertical velocities are measured, thus the fluid flow velocity is found. The Doppler frequency shift relates to the fluid velocity as

$$\Delta f = 2f/c \, (V_T + V_S),$$

wherein f is the transmitted frequency, c is the speed of sound in the fluid, $V_T$ is the tool velocity (which is usually known on the wire drum topsides) and Vs is the velocity of the scattering particles, both with a sign.

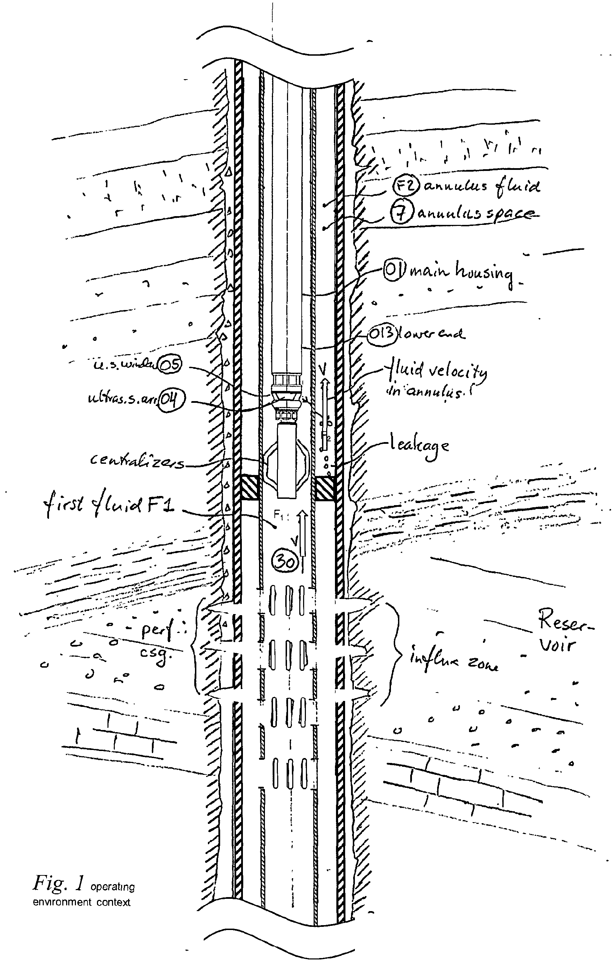

EP0442188 published 21.08.1991, withdrawn 1995, "Downhole Doppler flowmeter" is a device for measuring the upward flow velocity in a borehole. It has a similar obliquely-arranged set of transmitter and receiver as for US4947683 above, but with the transmitter and receiver arranged not at the lower end but at the lateral face of the sonde, please see its Fig. 1, thus measuring the annulus flow past the logging sonde. In order to correct for the local borehole diameter's effect on the annulus flow velocity past the sonde which is in the flow itself, and not in an annulus around any pipe, diameter measurements from a caliper logging device on the sonde are included for correcting the Doppler shift measured velocity to obtain the actual upward flow velocity in the borehole.

US-patent US3603145 published 07.09.1971 describes a method of monitoring fluids and flow in a borehole, comprising using a wireline logging sonde with an ultrasound transducer of predetermined frequency and with downstream and upstream acoustic receivers at known distances above and below, for measuring frequency shifts and thereby detecting upstream and downstream acoustic (sound) velocities. The difference between the upstream and downstream acoustic velocities gives a fluid flow velocity of the fluid past the sonde. The upstream and downstream sound velocities are related to fluid density.

As the acoustic velocity depends on density, and in the cited US-patent only the fluid flow velocities and the fluid acoustic velocities are sought, the acoustic signals propagating through the borehole wall and through the rocks must be discriminated. Thus that prior art document describes devices for directing the acoustic energy primarily through the fluid column in the borehole. Further, the document describes attenuators for reducing the signal transmission through the borehole wall. The acoustic measurement signals are passed through the wireline to the surface. At the surface the acoustic measurement signal are read out on a surface read-out unit reading the measurements from a signal transmission such as brushes on the wireline drum. The acoustic measurements received on the surface read-out unit are correlated with readings from a wireline logging depth measuring sheave at the surface, and recorded.

A further transducer assembly for use in monitoring systems in boreholes in connection with oil and/or gas exploration and/or extraction is disclosed in WO2010/151136 A1.

## Summary of the invention

Briefly, the invention concerns a pulse-wave ultrasound production well tubing wireline logging method using a logging tool (0) communicating via a wireline to a surface read-out unit,

- said logging tool provided with a frustoconical ring-shaped linear ultrasound transducer array (04) comprising ultrasound transducer elements (041), comprising
- switching between a PW echo backscatter imaging processing mode and a Doppler measurement processing mode, and
  for transmitting ultrasound signals,
- generating a number (n) of digital signals, and beam-forming said signals to represent ultrasound beams (A,B), converting said digital signals to voltage signals, connecting the voltage drive signal channels to oppositely directed consecutive series of said transducer elements (041), and transmitting wave pulses as said two opposite ultrasound beams (A) and (B) to the fluid in the tubing; and
- for receiving ultrasound signals,
- receiving returning signals and converting to analogue voltage signals, amplifying the voltage signals, converting them to digital signals and beamforming them, and combining the digital signals to a received digitized ultrasound time signal series for each ultrasound beam (A) and (B).

In said PW backscatter mode, forming a an ultrasound image data for beams (A) and (B), and in said Doppler mode, producing Doppler measurements for said focused point for each beams (A) and (B), and finally sending images and Doppler measurement to the surface read-out unit.

The invention is defined in the set of independent and dependent claims attached.

## Figure captions and details of embodiments of the invention

The main purpose of the present invention is to use ultrasound pulse-wave Doppler measurements to detect and measure flow in a petroleum well such as a production well, injection well, or the like, particularly flow in a tubing annulus or casing annulus. Flow in the tubing annulus or casing annulus may be due to leaks and are undesired and the present tool is capable of detecting and measure such flow. Another purpose is ultrasound pulse-wave imaging of the production pipe wall in a petroleum production well, an injection well, or the like. The tool of the invention is for conducting ultrasound pulse-wave Doppler measurements to detect and measure the flow of the fluids in the annulus surrounding the production pipe, and possibly also fluid flow velocities in further annuli such as outside the casing pipe. The Doppler measurements may be corrected for flow within the tubing. The Doppler measurements may also be corrected for clutter due to the tool's own movement, please see below. The production fluid and the annulus fluid may be oil, water or gas or a mixture of those, and may contain particles such as sand, or inhomogeneities. The production pipe annulus and the further annuli may be void and thus only fluid filled, and the casing annulus, if a casing is present, may be gravel packed, or cemented, but still permeable for fluids and subject to undesired leaks. Having the above properties the logging tool may be used for switching between logging for detecting undesired leaks in the well, for ultrasound imaging of the production tubing's inner surface, wall thickness and outer surface to detect pitting, cracks or holes or other irregularities, and for measuring fluid flow velocities in the production pipe annulus or the casing annulus. Doppler measurements within the production pipe may be used for correcting for the Doppler measurements in the production annulus, but other velocity measurements within the production pipe may serve the same purpose.

Fig. 1 is a highly simplified vertical section illustration of part of a completed petroleum well with a cemented casing in a borehole through overlying rocks to an influx zone in a reservoir formation. A first fluid (F1) flows in the production tubing and a second fluid (F2) is present in the annulus space (7). An ultrasound logging tool of the invention is arranged within the production tubing. The ultrasound logging tool of the invention has a frustoconical-shaped linear, ring-shaped ultrasound transducer array (04) of ultrasound transducer elements (041). In an embodiment the transducer array (04) is covered by an ultrasound transparent window around the ring-shaped ultrasound transducer array (04). The transducer array is arranged in a lower portion (013) near the lower end of a main housing (01). The transducer array (04) comprises in an embodiment a number of m= 288 transducer elements each with their signal transducing face generally radially outward. The number of transducer elements may not necessarily be 288, but for the present prototype embodiment this provided the possibility of selecting a high number of consecutive transducer elements (041) to be selected among the 288 at a time, for beamforming a transmitted ultrasound beam A (and its opposite beam B) with high azimuthal resolution. Further, the transmitting surface (042) of each of the 288 transducer elements (041) will cover about 1 degree azimuthally. Each transducer element's (041) transducer surface's (042) width is less than 1/2 of the wavelength, which will have an approximately spherical transmission which is required for beamforming through interference from several transducer elements. The number (m) of elements in said ring-shaped ultrasound transducer (04) may between 64 and 512 depending on the required azimuthal resolution and the wavelength.

In an embodiment of the invention the emitted ultrasound frequency of the pulse wave is in the range 1 to 5 MHz, preferably about 3 MHz. Particularly Doppler measurements may use down to 1 MHz.

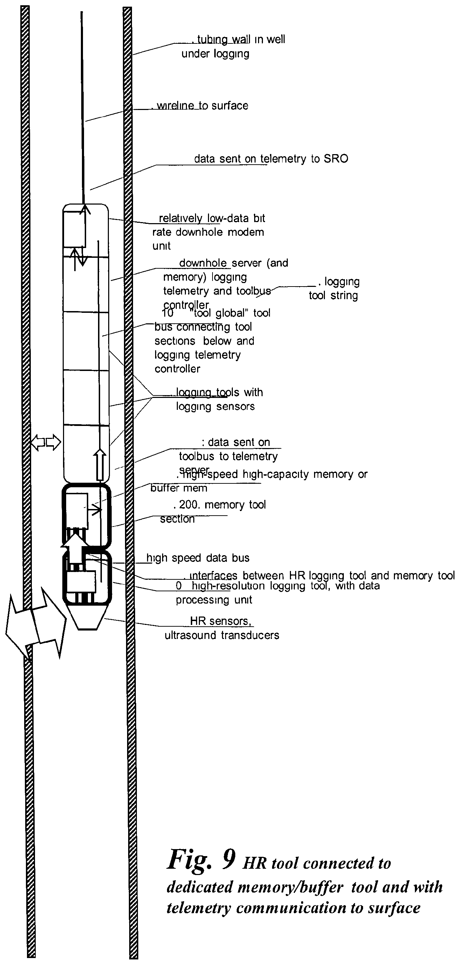

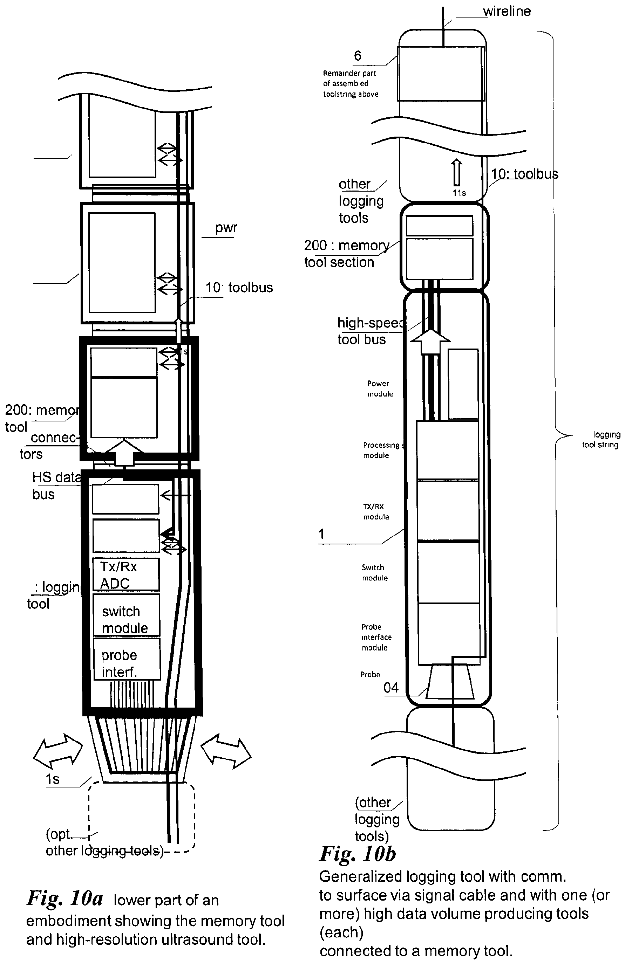

Centralizers may be arranged below the transducer array and also further up along the main housing (01), please see Fig. 1. The ultrasound tool is arranged for operating on a common toolbus with other logging tools in a logging tool string, please see Fig. 9, Fig. 10a and Fig. 10b. The ultrasound tool of the invention produces high-density ultrasound data at a high bit rate, the high bit rate exceeding the global bit rate on an ordinary toolbus usually connecting all tool sections with a telemetry server connected to a signal cable to a surface read-out unit, and certainly the telemetry bit rate at the signal cable itself, which is the main limiting bit rate factor. The ultrasound tool according to the invention is in a preferred embodiment connectable to a dedicated high capacity memory tool section ("02") connected immediately above the main housing (01). The ultrasound tool of the invention is arranged for being controlled from the surface and send low-resolution images to the surface via the common telemetry line and the ordinary toolbus while logging, and in the preferred embodiment for using the dedicated memory tool as a buffer for the high-resolution data produced. The dedicated memory tool may then be polled from the surface read-out unit for part of or all of the high-resolution data when capacity on the telemetry line is available.

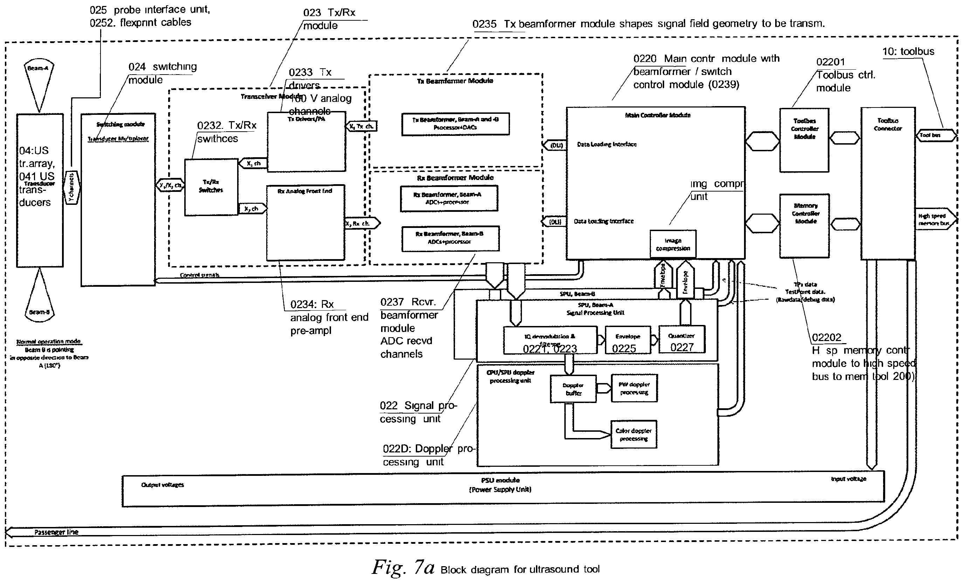

Fig. 2 is a highly simplified illustration of a vertical section through the mechanical structure of the ultrasound logging tool of the invention. In an upper end (013)'of the main housing (01) is a connector to the above tools in a toolstring. In a preferred embodiment of the invention the connector particularly has, in addition to the common power line and the toolstring-common toolbus, also connectors for the high speed data bus to the dedicated memory tool (200), please see Fig. 7a. In the lower portion (013) of the main housing (01) is a transducer housing sleeve (03) with a transverse wall (032) with a downward extending central axle (034). The central axle (034) serves two purposes; it forms the support of the ring-shaped ultrasound transducer array (04) and it further supports a subsequent nose portion (06) below the transducer array (04). In an embodiment of the invention an ultrasound transparent funnel-shaped window sleeve (05) surrounds the transducer array (04) and is held in place between the lower outer portion of the transducer housing sleeve (03) and the nose portion (06), and is locked to the transducer housing sleeve (03) by an upper locking ring (062) and to the nose portion (06) by a lower locking ring (061). The locking ring (061) has a diameter slightly larger than the largest diameter of the ultrasound transparent window (05) in order to reduce the amount of mechanical wear on the transparent window. Further, the locking ring (061) is tapered off radially in order not to block ultrasound waves passing radially and about 17 to 28 degrees down from the transverse plane to the sensor. Inside the main housing the electronics of the ultrasound tool is arranged.

Fig. 3 is a generalized view of the electronics arranged in an electronics structure frame (02) within the ultrasound tool mechanical structure. From the bottom end is illustrated the ultrasound transducer array (04) with its presently embodied 288 ultrasound transducer elements connected through 12 flexprint cables (0252) with a total of 288 conductors, and each flexprint cable having 1 common ground conductor, i.e. 300 conductors in all in the present prototype embodiment. The 12 flexprint cables extend in pairs through six passages (0253) through the transverse wall (032) up to a probe interface module (025). The probe interface module (025) connects further to a switch module (024), further connected to a transmitter/receiver module (023), further connected to a processing module (022). A power module (021) serves the modules which require power. When the electronic modules, in an embodiment each module is arranged at each its board, have been assembled in the electronics structure frame (02), the structure frame (02) is sled into the main housing (01) from the lower end (013), the flexprint cables thread through the passages (0341) in the transverse wall (032) connecting the probe interface card (025) to the transducer array (04), and the transducer housing sleeve (03) is screwed into lower end of the main housing (01). The tool is closed and pressure proof when the ultrasound transducer window (05) and the nose portion (06) are mounted on the central axle (034) and locked by the locking rings (061, 062). In an embodiment of the invention the transducer array as such is designed having a fluid-proof, pressure proof conical portion comprising the transducing surfaces (042) and one may dispose of the conical ultrasound transparent window (05).

Fig. 4a is a rough sketch of a cross-axial section of the linear ring-shaped ultrasound transducer (04) with some of its transducer elements (041),

Fig. 4b is a rough illustration of a longitudinal section of the transducer housing sleeve (03) with its flexprint cable passages (0252) through the transverse wall (032) which carries the downward protruding central axle (034) for holding the transducer (04) and the front portion (06).

Fig. 5a-d is a machine drawing of a preferred embodiment of the logging tool according to the invention, i.e.

showing the mechanical structure of the tool to some detail.

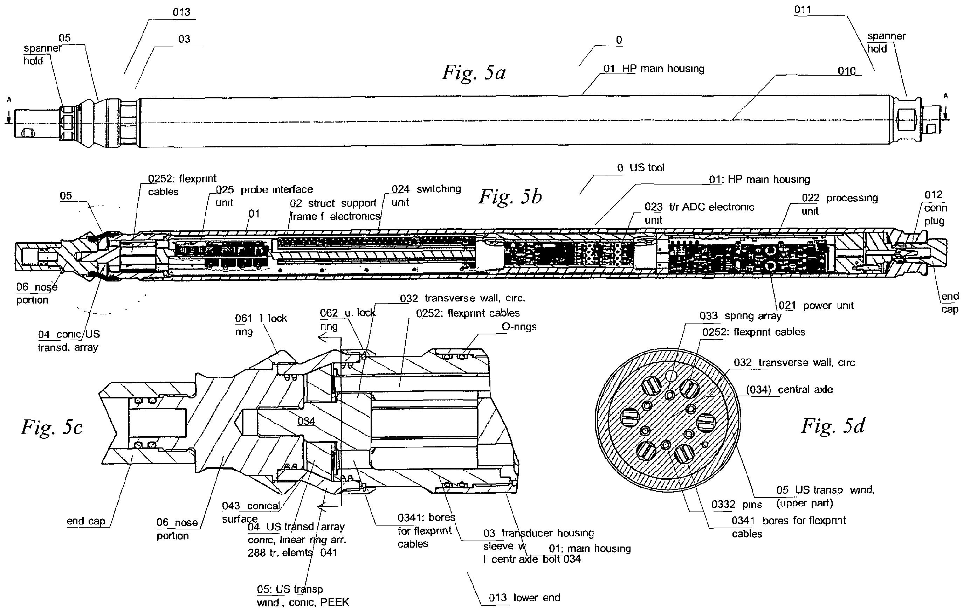

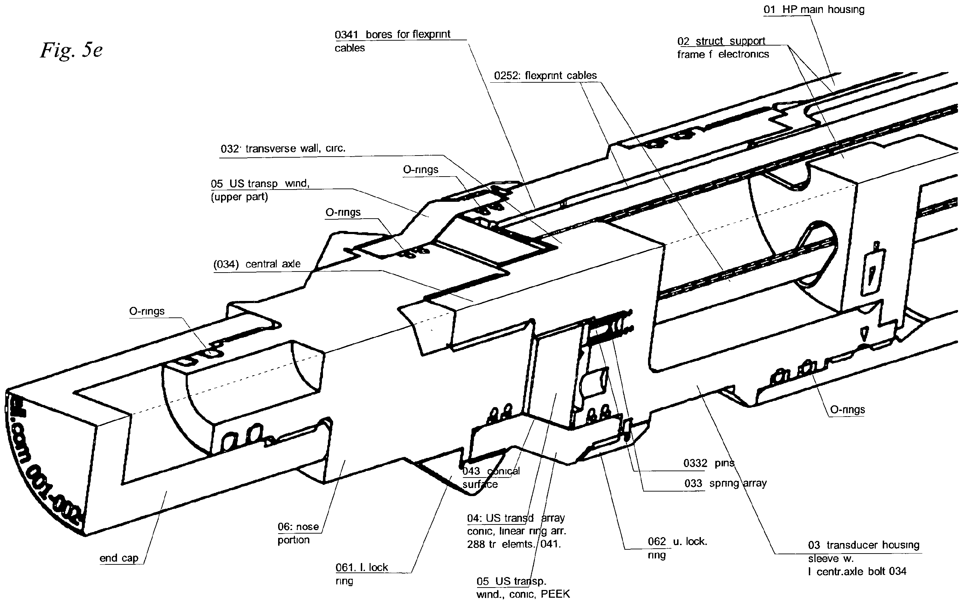

Fig. 5a is an elevation view of the logging tool according to the invention, with spanner slots in the main housing (01) near the upper end (011), and a removable protective end cap covering the connector plug (012) which preferably shall be connected to the dedicated memory tool (02). In the lower end (013) of the main housing (01) is arranged the transducer housing sleeve (03) with the ultrasound transparent window (05) and the nose portion (06), all locked by the locking rings. The housing sleeve (03) and the nose portion (06) are provided with spanner slots for mounting and disconnection. A protective end cap, removable, is also shown. The protective cap is removed and provided with a centralizer before introduction to the well in order to hold the tool centrally in the production tubing when logging. This may restrict the temporal ranges required and facilitate caliper logging with the ultrasound tool, and also facilitate the ultrasound logging of tubing wall images and tubing wall thickness, and further facilitating the through wall Doppler measurements of particle or fluid speed.

Fig. 5b is a longitudinal section corresponding to the view of Fig. 5a. From the bottom end is illustrated the ultrasound transducer array (04) with its ultrasound transducer elements connected through flexprint cables (0252) extending through passages (0341) through the transverse wall (032) up to a probe interface module (025) in the electronics structural frame (02). The probe interface module (025) connects further to a switch module (024), further connected to a transmitter/receiver module (023) which is digital to analog in the transmitter direction and analog to digital in the receiver direction. The t/r AD/DA converter module (023) is further connected to a processing module (022). A power module (021) serves the modules which require power, i.e. not the probe interface module. Here is shown the electronic modules in their assembled state in the electronics structure frame (02) sled in place into the main housing (01) from the lower end (013), and locked in place by the transducer housing sleeve (03) screwed into lower end of the main housing (01). The tool is closed and pressure proof with the ultrasound transducer window (05) and the nose portion (06) are mounted on the central axle (034) and locked by the locking rings (061, 062). An advantage of the present assembly is the fact that the ultrasound transparent window (05) is easily replaceable by an onsite operator without disturbing the ultrasound transducer array (04). In the upper end of the main housing (01) is shown the connector plug (021) to the above subsequent tool, preferably the dedicated memory tool (200).

Fig. 5c shows an enlarged cross-section indicated by the ring in Fig. 5b, with details of threads, O-rings, and relative positions of inward and outward threads of the threaded components in the lower end (013). Please notice that the upper locking ring (062) is flush with the outer diameter of the main housing (01) and the largest diameter of the ultrasound transparent window (05) and the lower locking ring (061).

The central bolt (034) is massive in the illustrated embodiment. In an embodiment of the invention the ultrasound logging tool of the invention is arranged not to be the lowest of the logging tools in the toolstring. In such an embodiment the nose portion portion is replaced by a connector sleeve for through electrical connection passing on from through the central bolt (034).

Fig. 5d is a cross-section view through the line C-C of Fig. 5b, through the circular transverse wall (032) just above the transducer array (04). The section is shown looking in a downward direction from the lower end (013) of the main housing. From centre and out the section shows the central bolt (034) on the circular transverse wall (032), six holes (0331) with a spring array (033) holding pins (0332) extending from the inner, rear portion of the transducer array (04) as seen in Fig. 4b. This spring array yields upwardly in the axial direction when the transducer array (04) is moved by the compressed ultrasound transducer window (05) due to their common conic interface, when subject to increasing pressure in the well, preventing deformation or mechanical damage of the transducer array. Radially outside the spring array holes are the through holes (0341) through the circular transverse wall (032) for the flexprint cables (0252). Radially outside this the circular transverse wall continues into the cylindrical portion of the transducer housing (03), followed by a gasket groove, the upper portion of the ultrasound transducer window (05), and finally the lower portion of the upper locking ring (062).

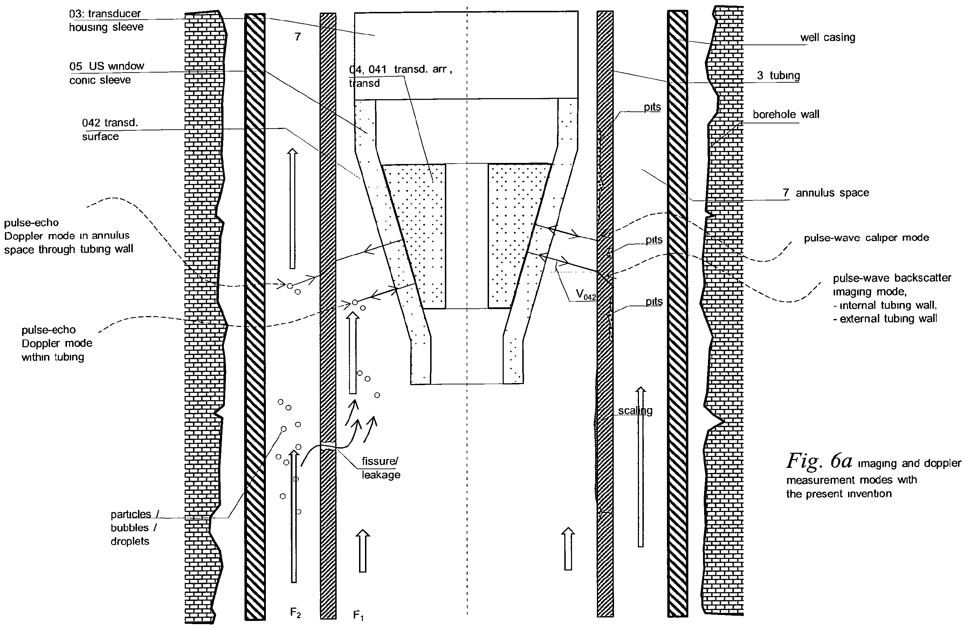

Fig. 6a is a vertical section through an ultrasound array only according to the invention in a tubing and casing in a well, with a first fluid (F1) flowing upwardly in the tubing and with a second fluid (F2) flowing in the annulus space between the well casing and the tubing (3). The transducer surface (042) is arranged with an angle (V042) with the tool axis which should be parallel with the tubing axis. This assures avoiding a directly reflected ultrasound signal which could otherwise saturate the reception when in receiving mode, but utilizes backscattered p-waves propagating through the fluid (F1).

- Caliper logging: At the right side of the axis shown in Fig. 6a is shown pulse-echo caliper logging of the radial distance to the inner tubing wall. Caliper logging may be conducted with diametrically opposite pairs of transducer groups A and B, selectable through the electronic switch board (024) controlled by the beamformer / switch control board (0239), please see Fig. 7a below.

- Tubing wall inner face imaging: Pulse-echo imaging of the inner wall is conducted on the same signal mode by selecting the same propagation mode and time windowing to sense for the first backscattered longitudinally propagating ultrasound waves representing the tubing wall. Inner face tubing wall imaging may be used for searching for tubing collars, valves, apertures in the tubing walls, etc. Imaging may also be used searching for undesired depositions of tar or scaling, pitting, cracks, holes and potential sources for leaks.

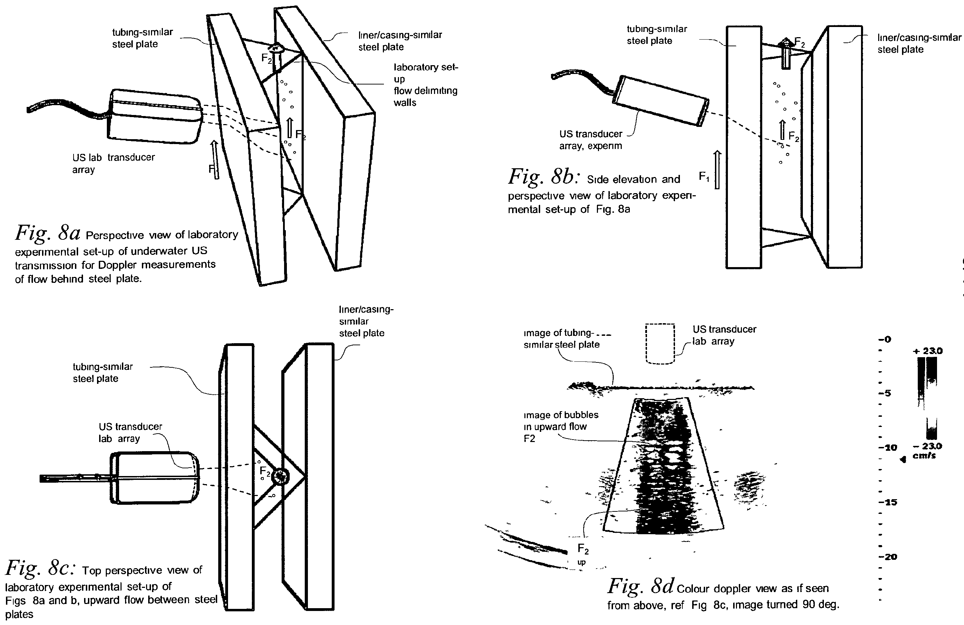

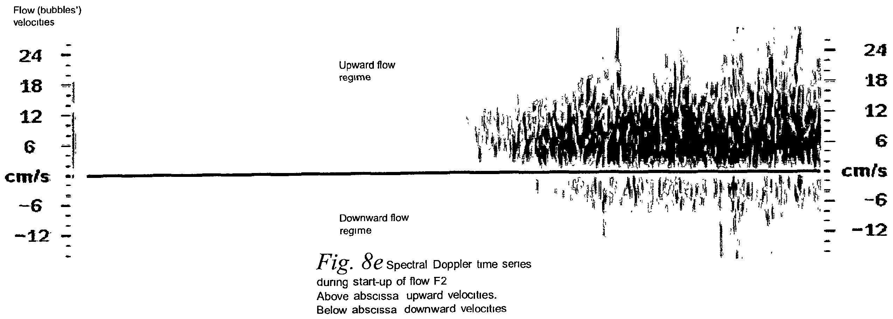

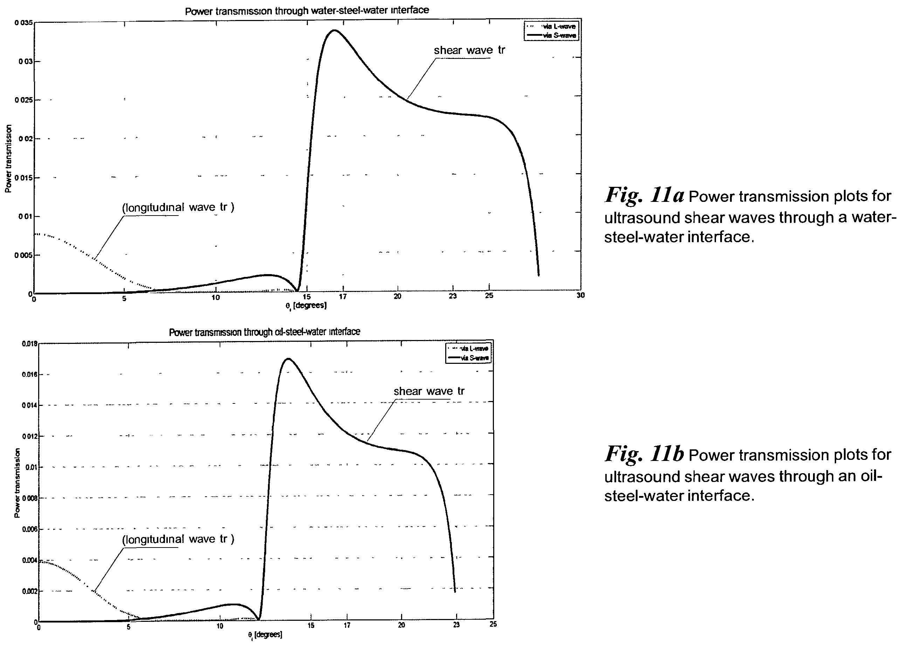

- Tubing wall outer face imaging may be conducted on signals having propagated through the tubing wall as p- or s waves and reflected or backscattered back through the tubing wall and back to the transducer elements (041). To discriminate the desired signal from the outer face from the backscattered and reflected signals from the tubing wall inner face, time window range truncation of the returning ultrasound signal may be conducted in order not to conduct unnecessary data acquisition and processing. This technique is generally used in the present invention in order to select an appropriate investigation depth, and may be controlled by an operator by the surface read-out unit. In the illustration is shown pitting in the outward facing tubing wall.
- Doppler imaging
- Tubing internal Doppler measurements may be conducted to measure fluid flow past the ultrasound transducer array (04) in the tubing for correcting annulus flow Doppler measurements.
- Tubing internal color Doppler measurements may be conducted to discern particles (sand, rust or other debris) or droplets (of water, oil or gas in one of the opposite phases) entering the tubing through leaks.
- Annulus flow may be measured based on ultrasound signals having followed the following path: p-wave emitted in tubing fluid, passing as s-wave through the tubing wall, propagating as p-wave through the annulus fluid, reflected and Doppler frequency changed by the droplet or particle, returning acoustic signal as s-wave through the tubing wall, and arriving at the transducer as a p-wave. for water to steel an optimal incident angle is 17 degrees, and for typical oil-to steel a good incident angle is between 13 and 21 degrees (depending also on oil density), please see Fig. 11b which is a diagram of transmission coefficient for a water-to-steel-to-water interface. For the s waves there is more than 1% transmission between about 15 degrees and 27 degrees, with more than 2% transmission in the range 15.5 to 26.5 degrees. In an embodiment the presently selected angle of the transducer conic angle is in the common good signal transmission range between 15.5 and 21 degrees which will be suitable also for and oil-steel-water interfaces.
- Annulus flow may also be measured and imaged using so-called ultrasound colour Doppler imaging, which measures the velocity field behind the tubing wall of individual volume elements of the annulus fluid (F2), please see Figs. 8a, b, c, d. Further, in Fig. 8e a spectral Doppler series is illustrated, Above the abscissa are approaching or upward flow values up to 24 cm/s, below the abscissa are negative values from -12 cm/s. One may see the onset of flow, here injected air bubbles in an upwelling water flow. The detected values for each instant range from about 2 cm/s to above 15 cm/s, and also some negative speed values.

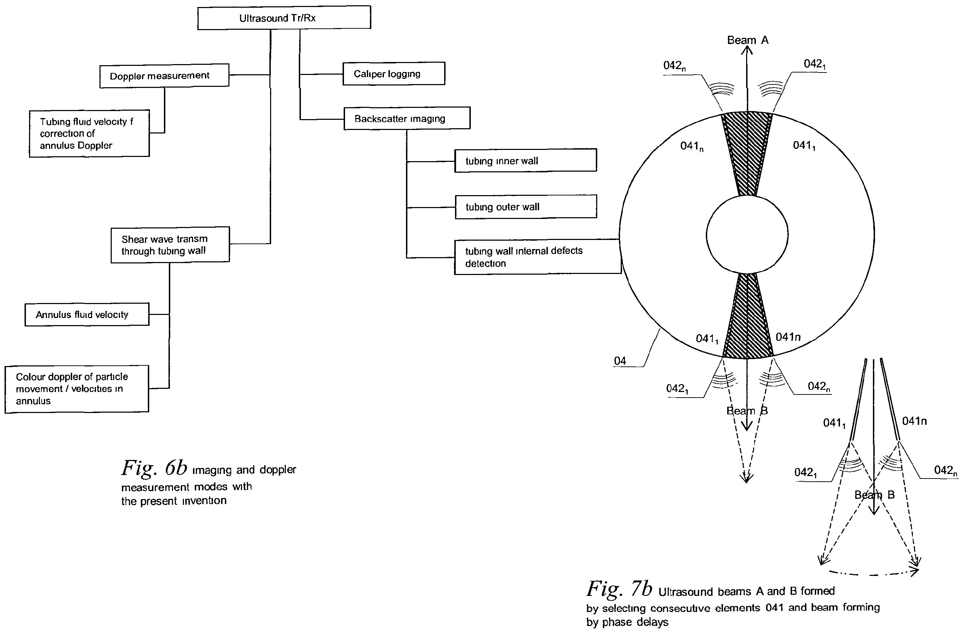

Fig. 6b is an overview of those different modes of ultrasound pulse-echo petroleum well tubing logging. The actual logging mode is selectable through the main controller board (0220) in the logging tool, please see Fig. 7a, controlled through telemetry from the surface read-out unit and the logging operator.

Fig. 7a is a block diagram of the sensor, electronic, and communication main components of the logging tool of the invention. As all control, communication, and data signals are digital, and all ultrasound signals are acoustic, analog, transducer selection, signal transmission and reception, amplification and transformation and processing must be conducted at an appropriate stage in order to obtain meaningful results.

Fig. 7b is an illustration of ultrasound beams A and B formed by selecting consecutive elements 041 and beam forming by phase delays.

Before the logging operation starts, the ultrasound logging tool according to the invention is assembled into a logging tool string.

With reference to Fig. 7a, the operation of the tool is outlined here.

*Mode selection*

- The operator at the surface selects at a surface read-out unit (SRO) which operation mode the logging tool of the invention to be used, either imaging (with caliper logging) mode or Doppler mode. The control signals are sent via the toolbus to the toolbus controller card (02201) which sends the command to the main controller board (0220).

General ultrasound signal transmission and acquisition of the invention

- Both for imaging and Doppler modes, the beamformer / switch control board (0239) selects which pair of transducer elements (041) to form the centre line for opposite beam (A) and beam (B), and which depth to focus on. Generally

for the invention, $2^n$ elements (041) to either sides of the selected centre line are then selected to be the two azimuthal parts of the array of $2 \times 2^n$ elements (041) forming each beam (A) and (B). One may have in mind the number of $2^n = 16$ elements (041) as an embodiment, but we do not settle at any specific value in this introduction. $2^n = 16$ is only an example based on the presently developed prototype of the invention, and may in other embodiments be 4, 8, 16 or 32 depending on the azimuthal transducer density in the ring-shaped ultrasound transducer array (04).

The $2^n$ elements (041) to either sides of the selected centre line are selected to be the two azimuthal parts of the array of $2 \times 2^n$ elements (041) forming each beam (A) and (B), please see Fig. 7b. In an embodiment of the invention, when operating with radially directed beams (A) and (B), the central element is shifted one at a time, covering 180 degrees each for beam (A) and (B), thus together covering 360 degrees for a half, 180 degrees turn of the centre line.

- The beamformer / switch control board (0239) sends two commands for transmitting:

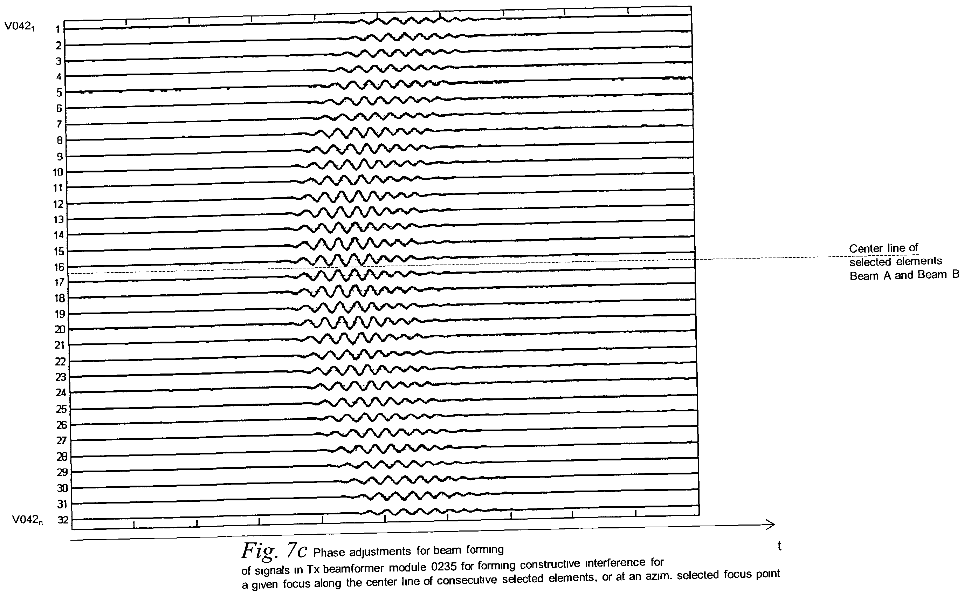

  Transmitter selection
  1) a command signal down to the switch board to connect the required $2^n$ transmitter channels to connect to the $2^n$ analog output signals, from a transmitter driver (0233) (described below) to the at any time selected set of $2 \times 2^n$ consecutive ultrasound transducer elements (041) of the ultrasound transducer (04) to form a beam (A) (and also (B)) at a time. A practical limit is the number of $2^n$ channels at the transducer / receiver switch board (024), presently 16 channels connected to a series of 32 consecutive transducer elements (041) of each beam (A) and (B).
  Beamforming
  2) a command signal to a transmit "Tx" beamformer module (0235) which shapes the digital signals which further down in the process shall be converted to an ultrasound acoustic field to be transmitted from the fan of $2 \times 2^n$ ultrasound transducer elements, while focusing at a desired depth (time), please see Fig. 7c below.

- The Tx beamformer module (0235) calculates $2 \times 2^{n-1}$ digital transmit signals, with delays depending on the distance from the central line, please see Fig. 7c, in order to transmit a wavefront in a common radial azimuthal direction. In order to focus at a point at the commanded distance the phases of the signals are changed.
  Due to internal symmetry in each beam (A) and also in beam (B), it is only required to form one signal curve for each pair of symmetrically arranged transducer elements (041) about the centre line, and also use the same signals for corresponding elements in beam (A) and beam (B).
- The Tx beamformer module's (0235) $2^n$ channels send their individually formed calculated, phase adjusted, digital beam-forming bundle of signals further to $2^n$ digital-to-analog converters with amplifiers in the Tx drivers/PA (0233). In an embodiment of the invention the amplifiers generate an analog transmit signal for each transducer element (041) in the range of 100 Volts.

Digital signals to analog signals

- The $2^n$ analog signals are sent from the corresponding $2^n$ Tx driver / power amplifier channels (0233) through transmit/receive control switches (0232) to the switch board (024) which connects the analog signals to the selected consecutive series of $2 \times 2^n$ transducer elements (041) with two elements, #$2^n$ and #$2^n+1$ in the present embodiment, about the selected centreline. The actual pair of two transducer elements about the selected centre line for each azimuth is selected by command from the beamformer/switch control board (0239) as described above. Due to beam transmission symmetry, each one of the $2^n$ channel's amplified analog signal is sent further to a pair of two ultrasound transducer elements (041) having the same relative positions about the centreline selected for each beam A and B. Due to azimuthal transmission symmetry, the same signal is also directed to transducer element pairs in both beam A and beam B, i.e. four transducer elements (041) receive the same analog signal to be transmitted. It is assumed that acoustic signals in beams (A) and (B) will not interfere.

Analog signals to transducer elements (041)

- The analog Tx signals are transmitted from the switch board (024) via the probe interface card (025) through the flexprint cables (0252), each conductor connected to a single transducer element (041), which converts the analog voltage signal to an ultrasound signal. The returning signals, whether they have been reflected, backscattered, then reappear as a wavefront at the same groups of transducer elements (041), and in "reflected beams" corresponding to beams (A) and (B), respectively.

Transmission of signals

- The ultrasound signals from the groups A and B of $2 \times 2^n$ selected consecutive transducer elements (041) propagate as a focused acoustic front, similar to the signal trains illustrated in Fig. 7c, out through the ultrasound transparent window (05), and forms a p-wave into the surrounding first fluid (F1), and is partially reflected or backscattered from the inner face of the tubing. A proportion of the acoustic energy of the acoustic signal is transmitted through the steel wall, depending on densities and incident angles. As explained above, for a water-steel-water transmission coefficient, please see Fig. 11a, a value of 17 degrees incident angle for the p-wave will propagate well as s-wave energy through both water-steel-water and oil-steel-water interfaces. For incident angles below 14.5 and 12.3 degrees, respectively, very little s-wave energy will be transmitted through the steel wall.

Returning signals

- The ultrasound signals having passed the tubing wall will then propagate as p-s-p-waves and be reflected from inhomogeneities in the annulus fluid and reflected back through the same p-s-p-mechanism and reappear as a small proportion of the initial signal, as a p-wavefront at the same group of $2 \times 2^n$ consecutive transducer elements (041).

Receipt of acoustic signals

- By the time of receipt of the acoustic signals at the group of $2 \times 2^n$ consecutive transducer elements (041), they must be put in a reception "Rx" mode. The two groups A and B are transmitted in unison, but do not represent the same image, so the two groups A and B must be processed separately when they operate in receive "Rx" mode.

The acoustic ultrasound signals received at the two opposite groups (A) and (B), each of $2 \times 2^n$ consecutive transducer elements (041) must be "receipt beamformed" to be focused at one single point at some stage before they are stacked and further processed. In the present invention this "beam forming" (or wavefront selection) is conducted at the Rx beamformer module (0237), please see Fig. 7a.

Analog to digital signals

- The analog voltage signals from the $2 \times 2^n$ consecutive transducer elements (041) in each group A and B are connected through the Tx/Rx switch, now reduced to $2^n$ analog signal channels from group A, and $2^n$ analog channels from group B, and sent to the analog to digital Analog front end pre-amplifier board (0234) to be amplified, please see Fig. 7a, and then digitized. The amplification is in an embodiment of the invention a variable-gain amplification with different gain for pre-tubing wall backscattering signals and post-tubing wall signals received, please see below.

Rx beam forming

- The digitized $2 \times 2^n$ signals from group A and from group B are then forwarded to the Rx beamformer module (0237) and "beamformed", i.e. separately time-shifted for becoming focused, to become more or less coherent in phase for one single point. The Rx beamforming utilizes different delays along the principle axis selected for transmission and reception, but opposite in time, not dissimilar to seismic trace stacking.

- Both for imaging and Doppler modes, the beamformer / switch control module (0239) selects which pair of transducer elements (041) to form the centre line for opposite beam (A) and beam (B), and which depth to focus on. Generally

for the invention, $2^n$ elements (041) to either sides of the selected centre line are then selected to be the two azimuthal parts of the array of $2 \times 2^n$ elements (041) forming each beam (A) and (B).

In an embodiment of the invention, $2^n = 16$ elements (041) to either sides of the selected centre line are selected to be the two azimuthal parts of the array of $2 \times 2^n = 32$ elements (041) forming each beam (A) and (B). The number of $2^n = 16$ elements (041) to either sides is only an example based on the presently developed prototype of the invention and could as well as $2^n = 16$ as used here, be selected as 4, 8, or 32. The central line between two central transducer elements (041) is shifted laterally (azimuthally) one element at a time (or several elements at a time, depending on desired azimuthal resolution), covering 180 degrees each for beam (A) and (B), thus together covering 360 degrees for a half turn of the centre line.

*Analog to digital signals*

- The analog voltage signals from the $2 \times 2^n$ consecutive transducer elements (041) in each group A and B are connected through the Tx/Rx switch, now reduced to $2^n$ signal channels from group A, and $2^n$ channels from group B, and sent to the analog to digital analog front end pre-amplifier module (0234) to be amplified, please see Fig. 7a, possibly with a variable controlled amplification, and digitized. The number of channels for transmission and reception is given by the selected embodiment of transceiver and switch modules. In the present embodiment one may have 32 Tx and 32 Rx, and one may utilize symmetry in the beam as in the described embodiment herein.

*Rx beam forming*

- The digitized $2 \times 2^n$ signals from group A and from group B are then forwarded to the Rx beamformer module (0237) and "beamformed", i.e. focused to one be more or less coherent in phase for one single point. The Rx "beamforming" utilizes different delays along the principle used for transmission, but opposite in time, not dissimilar to seismic trace stacking.

For pulse-wave Doppler measurements, both Tx and Rx are repeated for the same beam A and / or B for providing a velocity estimate over a given time range. It is possible to adjust the focus as an inhomogeneity source of the Doppler signal approaches.

The above steps with transmission and reception relates to one sampling of one reflection point in one "depth" of investigation from the transducer. The above steps are repeated for $288/2 = 144$ groups to form 288 points for each depth of investigation, for one elevation in the well, of the transducer elements. Thus one pixel height image scan has been conducted azimuthally, i.e. around the periphery around the transducer ring. This may be a caliper measure scan, an image scan, or a Doppler scan. Such scanned rings may be assembled to a 2-D image of the surroundings for each focus depth, the dimension of the 2-D image determined by the logging depth registrations at the surface log or other depth indicator.

*Signal processing, storage and transmission*

- the received, beam-formed signals are processed in signal processing units (022) which demodulate (0223) the signals, forms envelopes (0225) of the ultrasound signals and quantizes (0227) the demodulated signals into images. The quantized greyscale images are transferred to the main controller board (0220) wherein JPEG or other compression is conducted on the images, which are then in a preferred embodiment transmitted through a memory controller board (02202) to an LVDS bus, which is a high-speed bus, to a memory tool (200) described above.

Fig. 7c is an illustration of the Tx beamformer module (0235) calculated $2 \times 2^n = 2 \times 16$ digital transmit curves with delays depending on the corresponding transmitting surfaces (042) distance from the central line, in order to transmit a wavefront in a common radial azimuthal direction. In order to focus at a point at the commanded distance the phases of the signals are changed.

Fig. 8a illustrates a vertical section through an experimental setup in a water tank, wherein a multi-transducer scanner head is submerged in the tank at a small distance from a steel plate and directed 17 degrees incidence angle on the plate, and wherein a slow water flow is set up behind the steel plate. There is a second steel plate arranged behind the first one. The water and steel bodies may be compared from left to right with the tubing-internal fluid F1, here water, the tubing wall, the annulus fluid F2, here water, and the casing wall.

Fig. 8b is a vertical view of the same.

Fig. 8c shows, in a view corresponding to Fig. 8b, a colour Doppler image resulting from the setup in Figs. 8a and 8b, wherein bubbles have been introduced into the water flow. The lighter portions in the middle indicate upward flow up to 20 cm/s or more, while the darker portions to the sides indicate no flow or slightly downward flow. The image clearly indicates detectability of the bubbles in the water, and that their velocity upward or downward may be measured.

Fig. 8d shows, in a similar top perspective compared to Fig. 8c and turned 90 degrees, a colour Doppler image of an upwelling water flow with bubbles introduced as illustrated in Figs. 8a, b, and c.

Fig. 8e is an illustration of a spectral Doppler time series of the same experimental setup illustrated in Fig. 8a and 8b. Above the abscissa are approaching or upward flow values up to 24 cm/s, below the abscissa are negative values from -12 cm/s. One may clearly see the onset of flow, here injected air bubbles in an upwelling water flow. The detected values for each instant range from about 2 cm/s to above 15 cm/s, and also some negative speed values. There is a wide variation of velocities for each instant of time.

Fig. 9 is a vertical section through a tubing with a high data bit rate producing logging tool of the invention assembled into a logging tool string comprising other logging tools, not necessarily producing data at a high bit rate. The logging tool of the invention is combined with a dedicated memory tool section (200) arranged just above the ultrasound logging tool's (0) upper end, with the high data bit rate LVDS bus to the high-speed / high capacity memory tool's (200) memory section, which is also connected to the ordinary toolbus (10) of the toolstring.

Figs. 10a and 10b shows in slightly more detail the features of Fig. 9 and roughly indicate the main components of Fig. 7a, such as a ring-shaped ultrasound transducer array here named (1s), a number of conductors to the probe interface module (025), switch module (024), Tx/Rx ADC module (023), Tx/Rx beamformer module (0235, 0237), beamformer / switch control board (0239) (which sends control signals to switch module (024), please see Fig. 7a).

*Device mechanical structure*

The invention is a a petroleum production well ultrasound imaging and annulus fluid velocity logging tool (0), for use in a production tubing (3) conducting a first tubing flow (30) of a first fluid (F1) and surrounded by a tubing annulus space (7) with annulus fluids (F2) in a petroleum production well (100). The logging sonde (0) according to the invention comprises

- a fluid-proof cylindrical main housing (01) with an axis (010) having a lower end (013) and an upper end (011) and provided with a power and signal connector (012),
- the main housing (01) holding the electronics modules described above in a structural frame (02),
- the lower end (013) comprising a transducer housing sleeve (03) with a circular transverse wall (032) with an axially directed spring array (033) for spanning the conical ring transducer array (04) on a central axle (034) against the inner, conical surface of an ultrasound transducer window (05) held by a nose portion (06). The spring array (033) will allow movement of the transducer array (04) when the well pressure compresses the conical window (05) while the spring array (033) will maintain the contact with the transducer surfaces (042). This is important for maintaining the desired transmitted ultrasound pulse shape and for maintaining the desired transmitted and received energy.

Locking rings (061, 062) which are inward threaded and arranged from the nose portion (06) and the transducer housing (03) directions, respectively, secure the lower and upper axially directed sleeve portions of the US transparent window (05). The outer diameter of the locking rings (061) and (062) corresponds to the largest diameter of the main housing (01). The cross-section of the lower locking ring (062) is triangular and tapered off in order not to obstruct the outgoing and incoming ultrasound waves. An advantage of the mechanical structure is the easily replaceable nose portion (06) and ultrasound transparent window (05), and ultrasound array (04), respectively, which are accessible in that sequence at the lower portion (013) of the tool.

*Overview of the invention:*

To summarize, the apparatus of the present invention may be used for two main purposes:

I) Ultrasound pulse wave Imaging an inner wall of a tubing (or liner) in a petroleum well.
II) PW Doppler measurements of flow velocities for the fluids of the annulus of the well, in the tubing annulus, and possibly in further annuli, such as the liner annulus or caser annulus.

The image scans and PW Doppler measurements are coupled to the wireline depth encoder measurements and may be assembled to corresponding images. An operator may first image a perforated production part of a well for forming an image of the location and geometry of the perforations made. Subsequently, the operator may shift the apparatus to run in PW Doppler mode for measuring the flow velocities in the area of the perforations detected and imaged. The combined image and measurements may provide valuable information on the production conditions in the perforated part of the well.

The imaging is conducted in azimuthal scans with beams A and B of combined transmitter /receiver sequences as described above. Time windowing is selected in order to acquire a selected probing depth.

Doppler measurements

The PW Doppler measurements of the fluid flow may be conducted in a selected part of the well, i.e. in the production pipe itself, or in an annulus, and depends on the time window selected by the operator. The transducer angle (V042) allows utilizing the transmission coefficient in the selected angle range which provides good s-wave transmission, which again allows detecting Doppler shifts due to particle or bubble velocities in the annulus, i.e. behind the tubing wall.

The beam forming for conducting Doppler measurements is generally the same as the beam forming for backscatter imaging. For the Doppler measurements, the focus may be changed continuously with increasing two-way travel time during reception, so as for focusing on reflections with progressively increasing distance and two-way propagation time with increasing arrival time at the transducer, reflections which represent bubbles in increasing distance from the transducer. A PW Doppler acquisition may require a number of consecutive pulse emissions in the same direction in order to detect movement, e.g. a number of 16 pulse emissions. A PW Doppler measurement may be commanded by the main controller module to conduct so-called beam interleaving, i.e. sweep the centre line of beam A (and B) azimuthally in order to allow bubbles or particles in one azimuthal direction to move a significant distance during the number of 16 transmission and reception cycles, in order to measure their velocities, and that bubbles over the entire scanned azimuthal area are mapped in the desired depth range. The main controller module (0239) may also command beam interleaving while switching back and forth between PW backscatter imaging mode and PW Doppler mode in order to build a backscatter image of the interior of the tubing which is overlaid by annulus fluid velocity estimates.

The transducer angle used in the present invention is not only for allowing signal transmission through the tubing wall to conduct measurements in the tubing annulus, but also for avoiding direct reflection from the pipe wall, as directly reflected signals contains far more energy than backscattering. Direct reflections would saturate the receiving transducer amplifiers if set to detect post-tubing signals. In an embodiment of the invention, to avoid saturation, an auto-gain algorithm in the Rx analog front end pre-amplifiers (0234) may apply a pre- and post- tubing wall gain function wherein the distinction between pre- and post-tubing two-way travel time is based on automatic tubing wall detection algorithms. The two-way travel time may be deduced during imaging mode while conducting backscatter imaging of the tubing wall, or using pulse measurements during PW Doppler measurements.

A PW Doppler processing is conducted in the Doppler processing unit 022D, please see Fig. 7a. The PW Doppler processing requires significantly more data to do an annulus velocity estimate than pulse-echo imaging of the tubing wall. Therefore it will only be possible to do Doppler processing in a limited number for beam directions at the time because of time of flight limitations. This is because each pulse has to travel all the way from transducer surface to the sample volume at the desired distance and back before a new beam can be sent. If it takes too long time between each time a beam is sent in a specific direction (e.g. while performing beam interleaving) aliasing will occur.

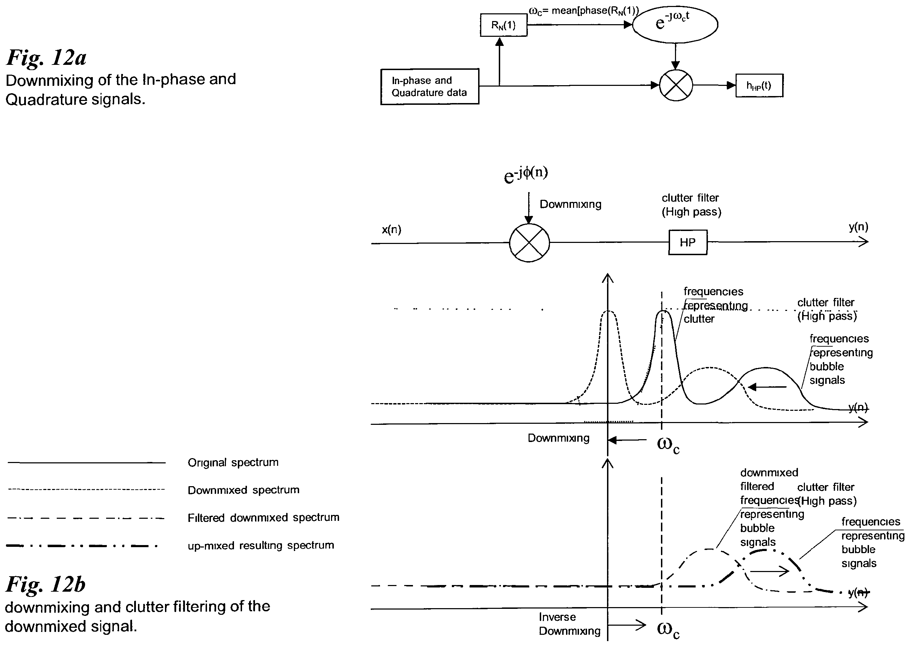

The measured fluid velocities should be corrected for the vertical speed of the tool itself. Irregular movements of the tool may produce reflections which may be attenuated using a clutter filter, please see below. The clutter filter is a high pass filter such as illustrated in Fig. 12b. A number of different clutter filters with different cut-off frequencies may be implemented in the Doppler processing unit (022D) and be selectable from a filter bank depending on the detected instrument velocity relative to the tubing wall amongst other parameters.

**Color Flow**

Color flow imaging is made using multi range PW Doppler; multiple sample volumes per region subject to measurements, per "region of interest" (ROI) in the annulus, for each beam. The mean frequencies may be color coded for direction, velocity, bandwidth and signal power. Power and mean frequency are estimated through autocorrelation of the In-phase and Quadrature signal:

$$P_N = R_N(0) = 1/N \ \sum_{k=1}^{N} |z(k)|^2$$

wherein k is Doppler sample and N is the number of samples in the estimate, e.g. >=16 for colour Doppler = packet size. For multi range Doppler z(k, l) is used
wherein k is the pulse and l is the sample in the pulse.

The velocity estimates can be made from a mean frequency estimator:

$$\omega_{IN} = phase\ [R_N(1)] = \arctan[\ (Im[R_N(1)]/Re[R_N(1)]\ ]$$

$$R_N = 1/N\ \sum_{k=1}^{N} z(k+1)z(k)\ ^*$$

wherein $R_N$ is the autocorrelation function is made with shift on, $R_N$(1), of the complex modulated pulse number N, e.g. a vector with all samples from the region of interest/the sample volume, and $\omega_{IN}$ is a mean frequency in radians, where the mean frequency is The number of samples used in the correlation (N) equals the number of samples to be averaged before estimation of mean angular frequency.

The signal power estimate can be made from a mean signal power estimator as above.
For color flow the packet size, the number of pulses to make one velocity vector needs to be kept low in order to achieve an acceptable temporal resolution. For PW Doppler this is not as critical as only one beam direction is used and more samples can be used for filtering. For PW Doppler, a Doppler frequency spectrum is estimated and not only the mean frequency as is the case for Color flow.

**Adaptive clutter filtering**

While moving a logging tool at a constant speed in the well, or if the logging tool is subject to some residual movement due to mechanical waves in the suspending wire, the backscatter form the pipe wall will have a strong, low frequency contribution to the Doppler spectrum due to the movement. Because the pipe wall backscatter signal is relatively strong compared to the fluid flow it will mask the flow signals. In the Doppler processing module (022D), may in an embodiment be implemented with a monitoring algorithm that continuously (which is particularly important if the tool's movement is uneven relative to the tubing wall) with adjustable averaging window and updating rate of mean frequency estimates conducts the following clutter filtering: Down-mixing the Doppler signal with the mean frequency $\omega_{IN}$ which can be estimated from the equation above, please see Fig. 12a, the center frequency of the tubing wall backscatter will thereby be brought close to 0 Hz, please see "downmixed spectrum" in Fig. 12b. The Doppler signal from the tubing wall is thereby maximum attenuated by a high-pass clutter filter, please see "filtered downmixed spectrum". After filtering the Doppler signal can be mixed back to its original frequency, as shown in Fig. 12b, please see "up-mixed resulting spectrum". The up-mixed signal is far less dominated by the low-frequency movement-induced clutter. Using this procedure will allow obtaining a Doppler signal of the weak reflections having passed the tubing wall, representing bubbles, particles or inhomogeneities moving in the tubing annulus.

Advantages of the invention

A significant advantage of the apparatus of the invention is that one may obtain focused Doppler measurements through the tubing wall of fluid movements. The Doppler annulus measurements may be clutter filtered for correcting for tool movements. One may switch between backscatter imaging mode and Doppler mode, which are both conducted and controlled by software in the tool itself, using control software from the surface. The apparatus is materially the same for the two modes. This implies that one may run several passes in imaging and Doppler mode without having to pull the tool from the well between the two modes. It will also allow combining the two modes in a common user interface at the surface. The tool of the invention may be used for Doppler measurement of flow of fluids through the tubing wall, and the selection of the conical angle to allow s-waves through the tubing wall will in addition reduce direct reflections from the inner face of the tubing, which would otherwise drown the Doppler signal. The Doppler processing and filtering contributes to enhance the weak annulus Doppler signals to allow annulus velocity measurements.

**Claims**

1. A pulse-wave ultrasound production well tubing wireline logging method comprising arranging a logging tool (0) in said tubing, said logging tool (0) communicating over a toolbus (10) and a downhole telemetry modem via a wireline to a surface read-out unit, said logging tool provided with a frustoconical ring-shaped linear ultrasound transducer array (04) comprising a number (m) of narrow, radially directed ultrasound transducer elements (041) with transducing surfaces (042) forming a conical lateral surface (043), **characterized by**

- controlling said logging tool to selectively operate in an PW backscatter imaging processing mode and a Doppler measurement processing mode, for a series of pulsed ultrasound transmission and reception against a focused point using said frustoconical ring-shaped linear ultrasound transducer array (04), comprising
- *transmitting* focused ultrasound wave pulses as two opposite ultrasound beams (A) and (B) in a direction orthogonally from said conical surface, to a surrounding well fluid in said tubing, and
- *receiving, analogue to digital converting and beamforming returning ultrasound signals* representing said opposite beams (A) and (B), and forming a signal envelope of said demodulated digitized signal time series for each beams (A) and (B);
- in said PW backscatter mode, quantizing said enveloped ultrasound data to form an ultrasound image data for a focused point for each beams (A) and (B),
- in said Doppler mode, using a series of said demodulated digitized time signal series producing Doppler measurement data for said focused point for each beams (A) and (B),
- during the Doppler measurement processing mode, conducting Doppler measurements, calculating a mean, relatively low velocity of said Doppler data representing a relatively low tool velocity, and using said mean, relatively low velocity for conducting clutter filtering for removing Doppler data representing said relatively low tool velocity, processing said filtered Doppler data for obtaining Doppler data arising due to fluid flow in an annulus space outside said tubing, wherein in said process of clutter filtering, down-sampling said Doppler data with said mean, relatively low velocity, so as for bringing a frequency spectrum of said down-sampled data representing clutter, to near zero frequency, and high-pass filtering said Doppler data to remove the contribution of Doppler data representing relatively low velocity,
- transmitting all or part of said formed ultrasound images and Doppler data on said toolbus (10), via said wireline to said surface read-out unit.

2. The method of claim 1, for transmitting ultrasound waves,
generating a number (n) of digital signals, beam-forming said number (n) of digital signals to represent focused ultrasound beams (A,B),

- converting said digital signals to said number (n) of voltage drive signals ,
- connecting said number (n) of voltage drive signal channels to two oppositely directed consecutive series each of twice said number (n) of said transducer elements (041),
- transmitting focused ultrasound wave pulses as said two opposite ultrasound beams (A) and (B) in a direction orthogonally from said conical surface, to said surrounding well fluid in said tubing,
- receiving returning ultrasound signals and and converting to analogue voltage signals on said two selected opposite consecutive series of transducer elements, representing said opposite beams (A) and (B),
- amplifying said received analogue voltage signals,
- converting said received analogue voltage signals to received digital signals and beamforming said received digital signals, and combining said received digital signals to a received digitized ultrasound time signal series for each ultrasound beam (A) and (B),
- demodulating said received digitized time signal series for each beams (A) and (B),
- forming a signal envelope of said demodulated digitized time signal series for each beams (A) and (B),
- said frustoconical ring-shaped linear ultrasound transducer array (04) comprising a number (n) of narrow, radially directed ultrasound transducer elements (041) with their transducing surfaces (042) forming part of a conical lateral surface (043) of said ultrasound array (04) having a conical angle of between 12 and 28 degrees transmitting said ultrasound signals.

3. The method of any one of claims 1 to 2, transmitting all or part of said ultrasound formed images or Doppler data via a dedicated high speed memory bus for temporary storing to a dedicated downhole memory tool (200) connected to said logging tool, said memory tool (200) also connected to said ordinary toolbus (10).

4. The method of any one of claims 1 to 3, said Doppler measurements comprising calculating fluid velocity, fluid flow direction, signal power, or flow velocity spectral information.

5. The wireline ultrasound logging tool of any one of claims 1 - 4, said number (n) of signal generating channels being n=2, 4, 8, 16, 32 or 64 channels.

6. The method of any one of claims 1 - 5, conducting time-controlled gain of said number (n) of signals in said channels in said receiver analogue front end amplifier (0234) for two-way travel times representing before and after backscattering from an inner wall of said tubing.

7. The method of any one of claims 1 - 6, in said process of clutter filtering, down-sampling said Doppler data with said mean, relatively low velocity, so as for bringing a frequency spectrum of said down-sampled data representing clutter, to near zero frequency, and high-pass filtering said Doppler data to remove the contribution of Doppler data representing relatively low velocity.

8. The method of any one of claims 1 - 7, conducting Doppler processing for time ranges representing two-way travel times for transmissions from said transducer surface (042), through said fluid in said tubing at said desired angle, as shear waves through the tubing wall, and through annulus fluid to inhomogeneities in said annulus fluid, thereby obtaining Doppler measurement data for said annulus fluid.

9. The method of any one of claims 1 - 8, shifting said beams (A) and (B) laterally for building up line image scans azimuthally of said region of interest,

   - conducting beam interleaving of one or both of beams (A) or (B) for allowing building up a backscatter image and a Doppler image in the same run,
   - conducting beam interleaving of one or both of beams (A) or (B) for allowing sufficient movement of an inhomogeneity in said fluid in said tubing or in said tubing annulus to occur, between consecutive ultrasound pulse wave returning from the assumed same inhomogeneity,- in the Doppler mode, transmitting calculated Doppler measurement data to said main control module (0220).

10. The method of any one of claims 1 - 19, wherein said number (m) of elements in said ring-shaped ultrasound transducer (04) is between 64 and 512, more specifically, in an embodiment, m=288.

11. The method of any one of claims 1 - 10, conducting pulse-wave backscatter imaging processing for time ranges representing two-way travel times for transmissions from said transducer surface (042), through said fluid in said tubing at said desired angle, as shear waves through the tubing wall, and to objects or features on the outer face of said tubing wall or through annulus fluid to objects outside said tubing wall, thereby obtaining image point measurements of said objects.

12. The method of any one of claims 1 - 11, upon beamforming said received signals, adjusting the focus to increasing radii with increasing two-way travel time and,

   - to avoid saturation, an auto-gain algorithm in the receiving analogue front end pre-amplifiers (0234) applying a pre- and post- tubing wall gain function.
   - wherein the distinction between pre- and post-tubing two-way travel time is based on a tubing wall detection algorithms, said two-way travel time deduced during imaging mode while conducting backscatter imaging of the tubing wall, or using pulse measurements during PW Doppler measurements.

13. A pulse-wave ultrasound production well tubing wireline logging tool comprising

   - a cylindrical pressure-proof main housing (01) with a connector in its upper end (011) for communicating over a toolbus (10) and a downhole telemetry modem via a wireline to a surface read-out unit,

   **characterized by**

   - said pressure-proof main housing (01) provided with
   - an ultrasound transducer housing sleeve (03) portion with a frustoconical ring-shaped linear ultrasound transducer array (04) comprising a number (m) of narrow, radially directed ultrasound transducer elements (041) with their transducing surfaces (042) forming a conical lateral surface (043), said transducer elements (042) for transmitting ultrasound energy to a surrounding well fluid in said tubing, said conical surface (043) having a conical angle,
   - a main controller module (0220) arranged for selective switching between a PW echo backscatter imaging processing mode in a signal processing module (022) and a Doppler measurement processing mode for a series of pulsed ultrasound transmission and reception against a focused point using said frustoconical ring-shaped linear ultrasound transducer array (04)

- for transmitting focused ultrasound wave pulses as two opposite ultrasound beams (A) and (B) in a direction normal to said conical surface, to a surrounding well fluid in said tubing, and
- for receiving, and analogue to digital converting and beamforming returning ultrasound signals representing said opposite beams (A) and (B), and arranged for forming a signal envelope of said demodulated digitized signal time series for each beams (A) and (B);
- said signal processing unit (022) arranged for in-phase and quadrature demodulation module (0221) for demodulating said time signal series,
- said main controller module (0220) arranged for transmitting compressed image or Doppler data on said toolbus controller module (02201) to said toolbus (10), for communicating to said surface read-out unit,
- a Doppler processing module (022D) which, during the Doppler measurement processing mode, is arranged to calculate a mean, relatively low velocity of said Doppler data representing a relatively low tool velocity, and to use said mean, relatively low velocity to conduct clutter filtering thus removing Doppler data representing said relatively low tool velocity, to process said filtered Doppler data to obtain Doppler data arising due to fluid flow in an annulus space outside said tubing, wherein, in said process of clutter filtering, the Doppler processing module is further arranged to down-sample said Doppler data with said mean, relatively low velocity, to bring a frequency spectrum of said down-sampled data representing clutter, to near zero frequency, and to high-pass filter said Doppler data to remove the contribution of Doppler data representing relatively low velocity.

**14.** The apparatus of claim 13, comprising

- a main controller module (0220) with a beamformer / switch control module (0239), arranged for commanding a transmitter beamformer module (0235) and a transducer switch module (024), for commanding and switching between transmitting and receiving ultrasound signals,
- arranged for transmitting, commanding a number (n) of signal generating channels in said transmitter beamformer module (0235) to generate said number (n) of digital signals, said transmitter beamformer module (0235) beam-forming said number (n) of digital signals to represent said pulsed, focused ultrasound beam (A,B),
- arranged for converting said digital signals to the same number (n) of analogue transmitter driver amplifier channels in a transmitter driver module (0233) to form said number (n) of voltage drive signals,
- arranged for transmitting said number (n) voltage drive signals via transmitter/receiver switches (0232) to said transducer switch module (024), said transducer switch module (024) connecting said number (n) of voltage drive signal channels to two opposite consecutive series each of twice said number (n) of said transducer elements (041),
- said transducer switch module (024) arranged for switching, connecting said two selected opposite consecutive series each of twice said number (n) of transducer elements (041) internally pairwise symmetrically in each consecutive series (A,B), to said number (n) of channels in two separate receiver analogue front end amplifier (0234) channels representing said opposite beams (A) and (B) for amplifying said received analogue voltage signals,
- arranged for sending said amplified channels' signals to parallel receiver beamformer modules (0237) each with said number (n) channels digitally converting and combining said number (n) of signals to one ultrasound time signal series for each ultrasound beam (A) and (B),
- a signal processing unit (022) arranged for each beams (A) and (B), for in-phase and quadrature demodulation module (0221) for demodulating said time signal series,
- said main controller module (0220) arranged for switching between said PW echo backscatter imaging processing mode in said signal processing module (022) and a Doppler measurement processing mode in said Doppler processing module (022D),
- said processing module (022) comprising a signal envelope forming module (0225) arranged for forming a signal envelope of said IQ demodulated data, and a quantizer (0227) for sending quantized ultrasound data to an image compression module in said main control module (0220),
- a Doppler buffer for temporarily storing demodulated digital signal series in said Doppler processing module (022D) and arranged for conducting Doppler processing in said PW Doppler processing module (022D).

**Patentansprüche**

**1.** Verfahren zur drahtgebundenen Ölquellen-Steigrohrmessung mit Impulswellen-Ultraschall, umfassend das Anordnen eines Bohrlochmesswerkzeugs (0) in dem Steigrohr, wobei das Bohrlochmesswerkzeug (0) über einen Werkzeugbus (10) und ein Bohrloch-Telemetriemodem über eine Drahtleitung mit einer Oberflächen-Ausleseeinheit kommuniziert, wobei das Bohrlochmesswerkzeug mit einer kegelstumpfförmigen ringförmigen linearen Ultraschall-Wandleranordnung (04) versehen ist, die eine Anzahl (m) von schmalen, radial gerichteten Ultraschall-Wandlerelementen (041) mit Wandleroberflächen (042), die eine konische Seitenfläche (043) bilden, umfasst, **gekennzeichnet durch**

- Steuern des Bohrlochmesswerkzeugs, um selektiv in einem PW-Rückstreu-Bildgebungsverarbeitungsmodus und einem Doppler-Messverarbeitungsmodus zu arbeiten, für eine Reihe von Sendungen und Empfängen von gepulstem Ultraschall gegen einen fokussierten Punkt unter Verwendung der kegelstumpfförmigen ringförmigen linearen Ultraschall-Wandleranordnung (04), umfassend
- Senden von fokussierten Ultraschallwellenimpulsen als zwei gegenläufige Ultraschallstrahlen (A) und (B) in einer von der konischen Oberfläche orthogonalen Richtung zu einem umgebenden Bohrlochfluid in dem Steigrohr und
- Empfangen, Wandeln von analog zu digital und Durchführen von Beamforming mit zurückkehrenden Ultraschallsignalen, die die gegenläufigen Strahlen (A) und (B) darstellen, und Bilden einer Signalhüllkurve der demodulierten digitalisierten Signalzeitreihe für jeden Strahl (A) und (B);
- Quantisieren, in dem PW-Rückstreumodus, der umhüllten Ultraschalldaten, um Ultraschallbilddaten für einen fokussierten Punkt für jeden Strahl (A) und (B) zu bilden,
- Verwenden, in dem Doppler-Modus, einer Reihe der demodulierten digitalisierten Zeitsignalreihen, die Doppler-Messdaten für den fokussierten Punkt für jeden Strahl (A) und (B) erzeugen,
- Durchführen, während des Doppler-Messwertverarbeitungsmodus, von Doppler-Messungen, Berechnen einer mittleren, relativ niedrigen Geschwindigkeit der Doppler-Daten, die eine relativ niedrige Werkzeuggeschwindigkeit darstellen, und Verwenden der mittleren, relativ niedrigen Geschwindigkeit zur Durchführung einer Stördaten-Filterung zum Entfernen von Doppler-Daten, die die relativ niedrige Werkzeuggeschwindigkeit darstellen, Verarbeiten der gefilterten Doppler-Daten zum Erhalten von Doppler-Daten, die aufgrund einer Fluidströmung in einem Ringraum außerhalb des Steigrohrs entstehen, wobei in dem Prozess der Stördaten-Filterung die Doppler-Daten mit der mittleren, relativ niedrigen Geschwindigkeit einem Downsampling unterzogen werden, um ein Frequenzspektrum der einem Downsampling unterzogenen Daten, die Stördaten darstellen, auf eine Frequenz nahe Null zu bringen, und die Doppler-Daten hochpassgefiltert werden, um den Beitrag der Doppler-Daten, die eine relativ niedrige Geschwindigkeit darstellen, zu entfernen,
- Senden aller oder eines Teils der gebildeten Ultraschallbilder und Doppler-Daten auf dem Werkzeugbus (10) über die Drahtleitung an die Oberflächen-Ausleseeinheit.

2. Verfahren nach Anspruch 1, zum Senden von Ultraschallwellen,
Erzeugen einer Anzahl (n) von digitalen Signalen, Durchführen von Beamforming mit dieser Anzahl (n) von digitalen Signalen, um fokussierte Ultraschallstrahlen (A, B) dazustellen,

- Umwandeln der digitalen Signale in die Anzahl (n) von Spannungsansteuersignalen,
- Verbinden der Anzahl (n) von Spannungssteuersignalkanälen mit zwei entgegengesetzt gerichteten, aufeinanderfolgenden Reihen, die jeweils das Doppelte der Anzahl (n) der Wandlerelemente (041) aufweisen,
- Senden von fokussierten Ultraschallwellenimpulsen als die beiden gegenläufigen Ultraschallstrahlen (A) und (B) in einer von der konischen Oberfläche orthogonalen Richtung zu dem umgebenden Bohrlochfluid in dem Steigrohr,
- Empfangen von zurückkehrenden Ultraschallsignalen und Umwandeln in analoge Spannungssignale an den beiden ausgewählten entgegengesetzt gerichteten aufeinanderfolgenden Reihen von Wandlerelementen, die die gegenläufigen Strahlen (A) und (B) darstellen,
- Verstärken der empfangenen analogen Spannungssignale,
- Umwandeln der empfangenen analogen Spannungssignale in empfangene digitale Signale und Durchführen von Beamforming mit den empfangenen digitalen Signalen und Kombinieren der empfangenen digitalen Signale zu einer empfangenen digitalisierten Ultraschall-Zeitsignalreihe für jeden Ultraschallstrahl (A) und (B),
- Demodulieren der empfangenen digitalisierten Zeitsignalreihen für jeden Strahl (A} und (B),
- Bilden einer Signalhüllkurve der demodulierten digitalisierten Zeitsignalreihe für jeden Strahl (A) und (B),
- wobei die kegelstumpfförmige ringförmige lineare Ultraschallwandleranordnung (04) eine Anzahl (n) schmaler, radial gerichteter Ultraschallwandlerelemente (041) umfasst, deren Wandlerflächen (042) einen Teil einer konischen Seitenfläche (043) der Ultraschallanordnung (04) mit einem Konuswinkel zwischen 12 und 28 Grad bilden, die die Ultraschallsignale senden.

3. Verfahren nach einem der Ansprüche 1 bis 2, wobei alle oder ein Teil der durch Ultraschall erzeugten Bilder oder Doppler-Daten über einen dedizierten Hochgeschwindigkeits-Speicherbus zum Zwischenspeichern an ein dediziertes Bohrloch-Speicherwerkzeug (200), das mit dem Bohrlochmesswerkzeug verbunden ist, gesendet werden, wobei das Speicherwerkzeug (200) ferner mit dem gewöhnlichen Werkzeugbus (10) verbunden ist.

4. Verfahren nach einem der Ansprüche 1 bis 3, wobei die Doppler-Messungen das Berechnen der Fluidgeschwindigkeit, der Fluidströmungsrichtung, der Signalleistung oder der spektralen Information über die Strömungsgeschwindigkeit umfassen.

5. Drahtgebundenes Ultraschall-Bohrlochesswerkzeug nach einem der Ansprüche 1 bis 4, wobei die Anzahl (n) der signalerzeugenden Kanäle n = 2, 4, 8, 16, 32 oder 64 Kanäle ist.

6. Verfahren nach einem der Ansprüche 1 bis 5, wobei eine zeitgesteuerte Verstärkung der Anzahl (n) von Signalen in den Kanälen in dem analogen Empfänger-Eingangsverstärker (0234) für Zweiwege-Laufzeiten durchgeführt wird, die eine vorherige und nachherige Rückstreuung von einer Innenwand des Steigrohrs darstellen.

7. Verfahren nach einem der Ansprüche 1 bis 6, wobei bei dem Prozess der Stördaten-Filterung die Doppler-Daten mit der mittleren, relativ niedrigen Geschwindigkeit einem Downsampling unterzogen werden, um ein Frequenzspektrum der dem Downsampling unterzogenen Daten, die Stördaten darstellen, auf eine Frequenz nahe Null zu bringen, und die Doppler-Daten hochpassgefiltert werden, um den Beitrag der Doppler-Daten, die eine relativ niedrige Geschwindigkeit darstellen, zu entfernen.

8. Verfahren nach einem der Ansprüche 1 bis 7, wobei eine Doppler-Verarbeitung für Zeitbereiche, die Zweiwege-Laufzeiten für Sendungen von der Wandleroberfläche (042) durch das Fluid in dem Steigrohr unter dem gewünschten Winkel als Scherwellen durch die Steigrohrwand und durch das Ringraumfluid zu Inhomogenitäten in dem Ringraumfluid darstellen, durchgeführt wird, wodurch Doppler-Messdaten für das Ringraumfluid erhalten werden.

9. Verfahren nach einem der Ansprüche 1 bis 8, umfassend das seitliche Verschieben der Strahlen (A) und (B), um azimutal von dem Bereich von Interesse Linienbildscans aufzubauen,

    - Durchführen der Strahlverschachtelung eines oder beider Strahlen (A) oder (B), um den Aufbau eines Rückstreubildes und eines Doppler-Bildes im selben Durchlauf zu ermöglichen,
    - Durchführen einer Strahlverschachtelung eines oder beider Strahlen (A) oder (B), um zu ermöglichen, dass eine ausreichende Bewegung einer Inhomogenität in dem Fluid in dem Steigrohr oder in dem Steigrohrringraum zwischen aufeinanderfolgenden Ultraschallimpulswellen, die von der angenommenen gleichen Inhomogenität zurückkehren, auftritt,
    - Senden, im Doppler-Modus, von berechneten Doppler-Messdaten an das Hauptsteuermodul (0220).

10. Verfahren nach einem der Ansprüche 1 bis 9, wobei die Anzahl (m) der Elemente in dem ringförmigen Ultraschallwandler (04) zwischen 64 und 512, insbesondere in einer Ausführungsform, m = 288 beträgt.

11. Verfahren nach einem der Ansprüche 1 bis 10, umfassend das Durchführen einer Pulswellen-Rückstreu-Bildverarbeitung für Zeitbereiche, die Zweiwege-Laufzeiten für Sendungen von der Wandleroberfläche (042) durch das Fluid in dem Steigrohr unter dem gewünschten Winkel als Scherwellen durch die Steigrohrwand und zu Objekten oder Merkmalen auf der Außenfläche der Steigrohrwand oder durch das Ringraumfluid zu Objekten außerhalb der Steigrohrwand darstellen, wodurch Bildpunktmessungen der Objekte erhalten werden.

12. Verfahren nach einem der Ansprüche 1 bis 11, umfassend, nach dem Durchführen von Beamforming mit den empfangenen Signalen, das Einstellen des Fokus auf zunehmende Radien bei zunehmender Zweiwege-Laufzeit und,

    - um Sättigung zu vermeiden, einen Auto-Verstärkungs-Algorithmus in dem empfangenden analogen Eingangs-Vorverstärkern (0234), der eine Verstärkungsfunktion vor und nach dem Steigrohr anwendet,
    - wobei die Unterscheidung zwischen der Zweiwege-Laufzeit vor und nach dem Steigrohr auf einem Steigrohrwand-Erfassungsalgorithmus basiert, wobei die Zweiwege-Laufzeit während des Bildgebungsmodus abgeleitet wird, während eine Rückstreuabbildung der Steigrohrwand durchgeführt wird, oder wobei Impulsmessungen während PW-Doppler-Messungen verwendet werden.

13. Werkzeug für drahtgebundene Ölquellen-Steigrohrmessung mit Impulswellen-Ultraschall, umfassend

- ein zylindrisches, druckfestes Hauptgehäuse (01) mit einem Verbinder an seinem oberen Ende (011) zum Kommunizieren über einen Werkzeugbus (10) und ein Bohrloch-Telemetriemodem über eine Drahtleitung mit einer Oberflächen-Ausleseeinheit, **gekennzeichnet durch**
- das druckfestes Hauptgehäuse (01), das versehen ist mit

- einem Ultraschallwandler-Gehäusehülsenteil (03) mit einer kegelstumpfförmigen, ringförmigen, linearen Ultraschallwandleranordnung (04), die eine Anzahl (m) von schmalen, radial gerichteten Ultraschall-Wandlerelementen (041) umfasst, deren Wandlerflächen (042) eine konische Seitenfläche (043) bilden, und die Wandlerelemente (042) zum Senden von Ultraschallenergie an ein umgebendes Bohrlochfluid in dem Steigrohr dienen, wobei die konische Fläche (043) einen konischen Winkel aufweist,

- ein Hauptsteuermodul (0220), das dazu angeordnet ist, um zwischen einem PW-Echorückstreu-Bildgebungsverarbeitungsmodus in einem Signalverarbeitungsmodul (022) und einem Doppler-Messverarbeitungsmodus für eine Reihe von gepulsten Ultraschallsendungen und -empfängen gegen einen fokussierten Punkt unter Verwendung der kegelstumpfförmigen ringförmigen linearen Ultraschallwandleranordnung (04) selektiv umzuschalten

- um fokussierte Ultraschallwellenimpulsen als zwei gegenläufige Ultraschallstrahlen (A) und (B) in einer zu der konischen Oberfläche senkrechten Richtung zu einem umgebenden Bohrlochfluid in dem Steigrohr zu senden, und

- um zurückkehrende Ultraschallsignale, die die gegenläufigen Strahlen (A) und (B) darstellen, zu empfangen und Analog-Digital-Wandlung und Beamforming durchzuführen, und das dazu angeordnet ist, eine Signalhüllkurve der demodulierten digitalisierten Signalzeitreihe für jeden Strahl (A) und (B) bilden;

- wobei die Signalverarbeitungseinheit (022) für das In-Phasen- und Quadratur-Demodulationsmodul (0221) zum Demodulieren der Zeitsignalreihe angeordnet ist,

- wobei das Hauptsteuermodul (0220) zum Senden komprimierter Bild- oder Doppler-Daten auf dem Werkzeugbus-Steuermodul (02201)

an den Werkzeugbus (10) angeordnet ist, um mit der Oberflächen-Ausleseeinheit zu kommunizieren,

- ein Doppler-Verarbeitungsmodul (022D), das dazu angeordnet ist, während des Doppler-Messverarbeitungsmodus eine mittlere, relativ niedrige Geschwindigkeit der Doppler-Daten, die eine relativ niedrige Werkzeuggeschwindigkeit darstellen, zu berechnen und die mittlere, relativ niedrige Geschwindigkeit zu verwenden, um eine Stördaten-Filterung durchzuführen und somit Doppler-Daten zu entfernen, die die relativ niedrige Werkzeuggeschwindigkeit darstellen, um die gefilterten Doppler-Daten zu verarbeiten, um Doppler-Daten zu erhalten, die aufgrund von Fluidströmung in einem Ringraum außerhalb des Steigrohrs entstehen, wobei bei dem Prozess der Stördaten-Filterung das Doppler-Verarbeitungsmodul ferner dazu angeordnet ist, die Dopplerdaten mit der mittleren, relativ niedrigen Geschwindigkeit einem Downsampling zu unterziehen, um ein Frequenzspektrum der einem Downsampling unterzogenen Daten, die Stördaten darstellen, auf eine Frequenz nahe Null zu bringen, und die Doppler-Daten einer Hochpassfilterung zu unterziehen, um den Beitrag der Doppler-Daten, die eine relativ niedrige Geschwindigkeit darstellen, zu entfernen.

**14.** Vorrichtung nach Anspruch 13, umfassend

- ein Hauptsteuermodul (0220) mit einem Beamformer-/Schaltsteuer-Modul (0239), das zum Steuern eines Sender-Beamformer-Moduls (0235) und eines Wandler-Schaltmoduls (024) zum Steuern und Umschalten zwischen Senden und Empfangen von Ultraschallsignalen angeordnet ist,

- zum Senden, Steuern einer Anzahl (n) von Signalerzeugungskanälen in dem Sender-Beamformer-Modul (0235) angeordnet ist, um die Anzahl (n) von digitalen Signalen zu erzeugen, wobei das Sender-Beamformer-Modul (0235) die Anzahl (n) von digitalen Signalen einem Beamforming unterzieht, um den gepulsten, fokussierten Ultraschallstrahl (A, B) darzustellen,

- zum Umwandeln der digitalen Signale in die gleiche Anzahl (n) von analogen Sendertreiber-Verstärkerkanälen in einem Sendertreiber-Modul (0233) angeordnet ist, um die Anzahl (n) von Spannungsansteuersignalen zu bilden,

- zum Senden der Anzahl (n) von Spannungsansteuersignalen über Sender/Empfänger-Schalter (0232) an das Wandler-Schaltmodul (024) angeordnet ist, wobei das Wandler-Schaltmodul (024) die Anzahl (n) von Spannungsansteuersignalkanälen mit zwei entgegengesetzten, aufeinanderfolgenden Reihen verbindet, die jeweils das Doppelte der Anzahl (n) der Wandlerelemente (041) aufweisen,

- wobei das Wandler-Schaltmodul (024) zum Umschalten und zum Verbinden der zwei ausgewählten entgegengesetzten aufeinanderfolgenden Reihen von jeweils der doppelten Anzahl (n) von Wandlerelementen (041) intern und paarweise symmetrisch in jeder aufeinanderfolgenden Reihe (A, B) mit der Anzahl (n) von Kanälen in zwei getrennten analogen Empfänger-Eingangsverstärkerkanälen (0234), die die gegenläufigen Strahlen (A) und (B) darstellen, zum Verstärken der empfangenen analogen Spannungssignale angeordnet ist,

- zum Senden der Signale der verstärkten Kanäle an parallele Empfänger-Beamformer-Module (0237), von denen jedes mit der Anzahl (n) von Kanälen die Anzahl (n) von Signalen digital umwandelt und zu einer Ultraschall-Zeitsignalreihe für jeden Ultraschallstrahl (A) und (B) kombiniert, angeordnet ist,

- eine Signalverarbeitungseinheit (022), die für jeden Strahl (A) und (B), für ein In-Phasen- und Quadratur-Demodulationsmodul (0221) zur Demodulation der Zeitsignalreihe angeordnet ist,

- wobei das Hauptsteuermodul (0220) zum Umschalten zwischen dem PW-Echorückstreuungs-Bildgebungsverarbeitungsmodus in dem Signalverarbeitungsmodul (022) und einem

Doppler-Messverarbeitungsmodus in dem Doppler-Verarbeitungsmodul (022D) angeordnet ist,

- wobei das Verarbeitungsmodul (022) ein Signalhüllkurvenbildungsmodul (0225), das zur Bildung einer Signalhüllkurve der IQ demodulierten Daten angeordnet ist, und einen Quantisierer (0227) zum Senden von quantisierten Ultraschalldaten an ein Bildkomprimierungsmodul in dem Hauptsteuermodul (0220) umfasst,

- einen Doppler-Puffer zum Zwischenspeichern demodulierter digitaler Signalreihen in dem Doppler-Verarbeitungsmodul (022D), und angeordnet zum Durchführen einer Doppler-Verarbeitung in dem PW-Doppler-Verarbeitungsmodul (022D).

## Revendications

1. Procédé de diagraphie ultrasonore à onde pulsée par câble de colonne de puits de production comprenant l'agencement d'un outil de diagraphie (0) dans ladite colonne, ledit outil de diagraphie (0) communiquant sur un bus d'outil (10) et un modem de télémétrie de fond de trou via un câble avec une unité de lecture de surface, ledit outil de diagraphie étant muni d'un réseau linéaire de transducteurs ultrasonores en forme de bague tronconique (04) comprenant un nombre (m) d'éléments transducteurs ultrasonores étroits et dirigés radialement (041) ayant des surfaces de transduction (042) formant une surface latérale conique (043), **caractérisé par**

   - la commande dudit outil de diagraphie pour fonctionner sélectivement dans un mode de traitement d'imagerie de rétrodiffusion d'onde pulsée, PW, et un mode de traitement de mesure Doppler, pour une série d'émissions et de réceptions ultrasonores pulsées contre un point focalisé à l'aide dudit réseau linéaire de transducteurs ultrasonores en forme de bague tronconique (04), comprenant

   - l'émission d'ondes pulsées ultrasonores focalisées sous la forme de deux faisceaux ultrasonores opposés (A) et (B) dans une direction orthogonale à ladite surface conique, vers un fluide de puits environnant dans ladite colonne, et

   - la réception, la conversion analogique-numérique et la formation de faisceau de signaux ultrasonores de retour représentant lesdits faisceaux opposés (A) et (B), et la formation d'une enveloppe de signal desdites séries chronologiques de signal numérisé démodulé pour chacun des faisceaux (A) et (B) ;

   - dans ledit mode de rétrodiffusion de PW, la quantification desdites données ultrasonores enveloppées pour former des données d'image ultrasonores pour un point focalisé pour chacun des faisceaux (A) et (B),

   - dans ledit mode Doppler, l'utilisation d'une série desdites séries chronologiques de signal numérisé démodulé en produisant des données de mesure Doppler pour ledit point focalisé pour chacun des faisceaux (A) et (B),

   - pendant le mode de traitement de mesure Doppler, la réalisation de mesures Doppler, le calcul d'une vitesse moyenne relativement faible desdites données Doppler représentant une vitesse d'outil relativement faible, et l'utilisation de ladite vitesse moyenne relativement faible pour réaliser un filtrage anti-fouillis pour éliminer les données Doppler représentant ladite vitesse d'outil relativement faible, le traitement desdites données Doppler filtrées pour obtenir des données Doppler apparaissant à cause d'un écoulement de fluide dans un espace annulaire à l'extérieur de ladite colonne, dans lequel dans ledit traitement de filtrage anti-fouillis, le sous-échantillonnage desdites données Doppler avec ladite vitesse moyenne relativement faible, de manière à amener un spectre fréquentiel desdites données sous-échantillonnées représentant le fouillis à une fréquence proche de zéro, et le filtrage passe-haut desdites données Doppler pour éliminer la contribution des données Doppler représentant la vitesse relativement faible,

   - l'émission de tout ou partie desdites images ultrasonores formées et données Doppler sur ledit bus d'outil (10), via ledit câble vers ladite unité de lecture de surface.

2. Procédé selon la revendication 1, pour l'émission d'ondes ultrasonores, ayant la génération d'un nombre (n) de signaux numériques, la formation de faisceau dudit nombre (n) de signaux numériques pour représenter des faisceaux ultrasonores focalisés (A, B),

   - la conversion desdits signaux numériques en ledit nombre (n) de signaux d'excitation de tension,
   - la liaison dudit nombre (n) de canaux de signal d'excitation de tension avec deux séries consécutives dirigées de façon opposée, chacune étant deux fois ledit nombre (n) desdits éléments transducteurs (041),
- l'émission d'ondes pulsées ultrasonores focalisées sous la forme desdits deux faisceaux ultrasonores opposés (A) et (B) dans une direction orthogonale à ladite surface conique, vers ledit fluide de puits environnant dans ladite colonne,
- la réception de signaux ultrasonores de retour et la conversion en signaux de tension analogiques sur lesdites deux séries consécutives opposées sélectionnées d'éléments transducteurs, représentant lesdits faisceaux opposés (A) et (B),
- l'amplification desdits signaux de tension analogiques reçus,
- la conversion desdits signaux de tension analogiques reçus en signaux numériques reçus et la formation de faisceau desdits signaux numériques reçus, et la combinaison desdits signaux numériques reçus avec une série de signaux chronologiques ultrasonores numérisés reçus pour chaque faisceau ultrasonore (A) et (B),
- la démodulation desdites séries de signaux chronologiques numérisés reçus pour chacun des faisceaux (A) et (B),
- la formation d'une enveloppe de signal desdites séries de signaux chronologiques numérisés démodulés pour chacun des faisceaux (A) et (B),
- ledit réseau linéaire de transducteurs ultrasonores en forme de bague tronconique (04) comprenant un nombre (n) d'éléments transducteurs ultrasonores étroits et dirigés radialement (041) avec leurs surfaces de transduction (042) faisant partie d'une surface latérale conique (043) dudit réseau ultrasonore (04) ayant un angle conique d'entre 12 et 28 degrés émettant lesdits signaux ultrasonores.

3. Procédé selon l'une quelconque des revendications 1 à 2, ayant l'émission de tout ou partie desdites images ultrasonores formées ou données Doppler via un bus mémoire à haute vitesse dédié pour un stockage temporaire vers un outil de mémoire de fond de trou dédié (200) connecté audit outil de diagraphie, ledit outil de mémoire (200) étant également connecté audit bus d'outil ordinaire (10).

4. Procédé selon l'une quelconque des revendications 1 à 3, lesdites mesures Doppler comprenant le calcul de la vitesse de fluide, de la direction d'écoulement de fluide, de la puissance de signal ou d'informations spectrales de vitesse d'écoulement.

5. Outil de diagraphie ultrasonore par câble selon l'une quelconque des revendications 1 à 4, ledit nombre (n) de canaux de génération de signal étant n = 2, 4, 8, 16, 32 ou 64 canaux.

6. Procédé selon l'une quelconque des revendications 1 à 5, ayant la réalisation d'un gain commandé dans le temps dudit nombre (n) de signaux dans lesdits canaux dans ledit amplificateur frontal analogique récepteur (0234) pour des temps de déplacement bidirectionnels représentant avant et après une rétrodiffusion à partir d'une paroi interne de ladite colonne.

7. Procédé selon l'une quelconque des revendications 1 à 6, ayant dans ledit processus de filtrage anti-fouillis, le sous-échantillonnage desdites données Doppler avec ladite vitesse moyenne relativement faible, de manière à amener un spectre fréquentiel desdites données sous-échantillonnées représentant le fouillis à une fréquence proche de zéro, et le filtrage passe-haut desdites données Doppler pour éliminer la contribution des données Doppler représentant la vitesse relativement faible.

8. Procédé selon l'une quelconque des revendications 1 à 7, ayant la réalisation d'un traitement Doppler pour des plages temporelles représentant des temps de déplacement bidirectionnels pour des émissions à partir de ladite surface de transducteur (042), à travers ledit fluide dans ladite colonne selon ledit angle souhaité, sous la forme d'ondes de cisaillement à travers la paroi de colonne et à travers un fluide d'espace annulaire jusqu'à des inhomogénéités dans ledit fluide d'espace annulaire, ce qui permet d'obtenir des données de mesure Doppler pour ledit fluide d'espace annulaire.

9. Procédé selon l'une quelconque des revendications 1 à 8, ayant le décalage lesdits faisceaux (A) et (B) latéralement pour construire des balayages d'image de ligne de manière azimutale de ladite région d'intérêt,

- la réalisation d'un entrelacement de faisceau de l'un ou des deux parmi les faisceaux (A) ou (B) pour permettre la construction d'une image de rétrodiffusion et une image Doppler dans la même exécution,
- la réalisation d'un entrelacement de faisceau de l'un ou des deux parmi les faisceaux (A) ou (B) pour permettre un mouvement suffisant d'une inhomogénéité dans ledit fluide dans ladite colonne ou dans ledit espace annulaire de colonne de se produire, entre une onde pulsée ultrasonore consécutive revenant de la même inhomogénéité supposée,
- dans le mode Doppler, l'émission de données de mesure Doppler calculées vers ledit module de commande principal (0220).

10. Procédé selon l'une quelconque des revendications 1 à 9, dans lequel ledit nombre (m) d'éléments dans ledit transducteur ultrasonore en forme de bague (04) est entre 64 et 512, plus spécifiquement, selon un mode de réalisation, m = 288.

11. Procédé selon l'une quelconque des revendications 1 à 10, ayant la réalisation d'un traitement d'imagerie de rétrodiffusion d'onde pulsée pour des plages temporelles représentant des temps de déplacement bidirectionnels pour des émissions à partir de ladite surface de transducteur (042), à travers ledit fluide dans ladite colonne selon ledit angle souhaité, sous la forme d'ondes de cisaillement à travers la paroi de colonne et vers des objets ou des détails sur la face externe de ladite paroi de colonne ou à travers le fluide d'espace annulaire vers des objets à l'extérieur de ladite paroi de colonne, ce qui permet d'obtenir des mesures ponctuelles d'image desdits objets.

12. Procédé selon l'une quelconque des revendications 1 à 11, ayant lors de la formation de faisceau desdits signaux reçus, le réglage de la focalisation vers des rayons croissants avec un temps de déplacement bidirectionnel croissant et,

- pour éviter la saturation, un algorithme de gain automatique dans les préamplificateurs frontaux analogiques de réception (0234) appliquant une fonction de gain de paroi pré- et post-colonne,
- dans lequel la distinction entre le temps de déplacement bidirectionnel pré- et post-colonne est basée sur un algorithme de détection de paroi de colonne, ledit temps de déplacement bidirectionnel étant déduit pendant le mode d'imagerie tout en réalisant une imagerie de rétrodiffusion de la paroi de colonne, ou à l'aide de mesures d'impulsions pendant les mesures Doppler de PW.

13. Outil de diagraphie ultrasonore à onde pulsée par câble de colonne de puits de production comprenant

- un boîtier principal cylindrique résistant à la pression (01) ayant un connecteur dans son extrémité supérieure (011) pour communiquer sur un bus d'outil (10) et un modem de télémétrie de fond de trou via un câble avec une unité de lecture de surface, **caractérisé par**
- ledit boîtier principal résistant à la pression (01) étant muni
- d'une partie de manchon de boîtier de transducteur ultrasonore (03) ayant un réseau linéaire de transducteurs ultrasonores en forme de bague tronconique (04) comprenant un nombre (m) d'éléments transducteurs ultrasonores étroits et dirigés radialement (041) avec leurs surfaces de transduction (042) formant une surface latérale conique (043), lesdits éléments transducteurs (042) étant destinés à émettre une énergie ultrasonore vers un fluide de puits environnant dans ladite colonne, ladite surface conique (043) ayant un angle conique,
- un module contrôleur principal (0220) conçu pour la commutation sélective entre un mode de traitement d'imagerie de rétrodiffusion d'écho de PW dans un module de traitement de signal (022) et un mode de traitement de mesure Doppler pour une série d'émissions et de réceptions ultrasonores pulsées contre un point focalisé à l'aide dudit réseau linéaire de transducteurs ultrasonores en forme de bague tronconique (04)
- pour l'émission d'ondes pulsées ultrasonores focalisées sous la forme de deux faisceaux ultrasonores opposés (A) et (B) dans une direction normale à ladite surface conique, vers un fluide de puits environnant dans ladite colonne, et
- pour la réception, et la conversion analogique-numérique et la formation de faisceau de signaux ultrasonores de retour représentant lesdits faisceaux opposés (A) et (B), et conçu pour la formation d'une enveloppe de signal desdites séries chronologiques de signal numérisé démodulé pour chacun des faisceaux (A) et (B) ;
- ladite unité de traitement de signal (022) étant conçue pour un module de démodulation en phase et en quadrature (0221) pour démoduler ladite série de signaux temporels,
- ledit module contrôleur principal (0220) étant conçu pour l'émission d'une image compressée ou de données Doppler sur ledit module contrôleur de bus d'outil (02201) vers ledit bus d'outil (10), pour communiquer avec ladite unité de lecture de surface,
- un module de traitement Doppler (022D) qui, pendant le mode de traitement de mesure Doppler, est conçu pour calculer une vitesse moyenne relativement faible desdites données Doppler représentant une vitesse d'outil relativement faible, et pour utiliser ladite vitesse moyenne relativement faible pour réaliser un filtrage anti-fouillis en éliminant ainsi les données Doppler représentant ladite vitesse d'outil relativement faible, pour traiter lesdites données Doppler filtrées pour obtenir des données Doppler apparaissant à cause d'un écoulement de fluide dans un espace annulaire à l'extérieur de ladite colonne, dans lequel dans ledit traitement de filtrage anti-fouillis, le module de traitement Doppler est en outre conçu pour sous-échantillonner lesdites données Doppler avec ladite vitesse moyenne relativement faible, pour amener un spectre fréquentiel desdites données sous-échantillonnées représentant le fouillis à une fréquence proche de zéro, et pour réaliser un filtrage passe-haut desdites données Doppler pour éliminer la contribution des données Doppler représentant la vitesse relativement faible.

14. Appareil selon la revendication 13, comprenant

- un module contrôleur principal (0220) ayant un module de commande de formateur de faisceau/commutateur (0239), conçu pour commander un module de formateur de faisceau d'émetteur (0235) et un module de commutateur de transducteur (024), pour commander et commuter entre des signaux ultrasonores d'émission et de réception ;
- conçu pour émettre, en commandant un nombre (n) de canaux de génération de signal dans ledit module de formateur de faisceau d'émetteur (0235) pour générer ledit nombre (n) de signaux numériques, ledit module de formateur de faisceau d'émetteur (0235) formant un faisceau dudit nombre (n) de signaux numériques pour représenter ledit faisceau ultrasonore focalisé pulsé (A, B),
- conçu pour convertir lesdits signaux numériques en le même nombre (n) de canaux d'amplificateur excitateur émetteur analogique dans un module excitateur émetteur (0233) pour former ledit nombre (n) de signaux d'excitation de tension,
- conçu pour émettre ledit nombre (n) de signaux d'excitation de tension via des commutateurs d'émetteur/de récepteur (0232) vers ledit module de commutation de transducteur (024), ledit module de commutation de transducteur (024) connectant ledit nombre (n) de canaux de signal d'excitation de tension à deux séries consécutives opposées chacune de deux fois ledit nombre (n) desdits éléments transducteurs (041),
- ledit module de commutation de transducteur (024) étant conçu pour commuter, en reliant lesdites deux séries consécutives opposées sélectionnées chacune de deux fois ledit nombre (n) d'éléments transducteurs (041) en interne par paire symétriquement dans chaque série consécutive (A, B), vers ledit nombre (n) de canaux dans deux canaux d'amplificateur frontal analogique récepteur (0234) distincts, des canaux représentant lesdits faisceaux opposés (A) et (B) pour l'amplification desdits signaux de tension analogiques reçus,
- conçu pour envoyer lesdits signaux de canaux amplifiés vers des modules de formateur de faisceau récepteur parallèles (0237) chacun ayant ledit nombre (n) de canaux convertissant numériquement et combinant ledit nombre (n) de signaux en une série de signaux chronologiques ultrasonores pour chaque faisceau ultrasonore (A) et (B),
- une unité de traitement de signal (022) conçue pour chacun des faisceaux (A) et (B), pour un module de démodulation en phase et en quadrature (0221) pour démoduler ladite série de signaux temporels,
- ledit module contrôleur principal (0220) étant conçu pour commuter entre ledit mode de traitement d'imagerie de rétrodiffusion d'écho de PW dans ledit module de traitement de signal (022) et un mode de traitement de mesure Doppler dans ledit module de traitement Doppler (022D),
- ledit module de traitement (022) comprenant un module de formation d'enveloppe de signal (0225) conçu pour former une enveloppe de signal desdites données démodulées IQ, et un quantificateur (0227) pour envoyer des données ultrasonores quantifiées à un module de compression d'image dans ledit module de commande principal (0220),
- un tampon Doppler pour stocker temporairement des séries de signaux numériques démodulés dans ledit module de traitement Doppler (022D) et conçu pour réaliser un traitement Doppler dans ledit module de traitement Doppler de PW (022D).

**Fig. 1** operating environment context

- (F2) annulus fluid
- (7) annulus space
- (01) main housing
- (013) lower end
- fluid velocity in annulus. $\Gamma$
- leakage
- u.s. window (05)
- ultras.s.arr (04)
- centralizers
- first fluid F1
- F1
- V
- (30)
- perf.
- csg.
- influx zone
- Reservoir

EP 3 080 558 B1

*Fig. 2*
external shell and
mechanical structure

(012) transducer

(03) lower

(01) main housing

(011) upper end

200 memory tool

(013) axis

Memory Tool
threaded
connector

nose port (06)

lock ring (061)

(05)

circular transv. wall (031)

nose port. (06)

ring transducer (04)

*Fig. 3* electronics
support structure

(0253) flexpr.c.pass

(02) frame

Power-kart (021)

(013) axis

(0252)
flexprint
cables
12×24 cx

(031)

(025)
probe
interface
card

(024)
switch
board

(023)
t/r
kart

(012)

*Fig. 4a*

trans. wall (032)

Fig. 4b

(034)

(4)

(0252)

(03)

041 radially directed
transd
elements

(033)

Fig. 5a

Fig. 5b

Fig. 5c

Fig. 5d

*Fig. 5e*

01  HP main housing

02  struct. support
frame f electronics

0341  bores for flexprint
cables

0252: flexprint cables

032: transverse wall, circ.

O-rings

05  US transp wind,
(upper part)

O-rings

(034)  central axle

O-rings

043  conical
surface

0332  pins

033  spring array

06: nose
portion

04: US transd array
conic, linear ring arr.
288 tr elemts. 041.

062  u. lock.
ring

03  transducer housing
sleeve w.
l centr.axle bolt 034

end cap

061. l. lock
ring

05  US transp.
wind., conic, PEEK

EP 3 080 558 B1

03: transducer housing sleeve

05 US window conic sleeve

042 transd. surface

pulse-echo Doppler mode in annulus space through tubing wall

pulse-echo Doppler mode within tubing

particles / bubbles / droplets

7

04, 041 transd. arr , transd

fissure/ leakage

$F_2$

$F_1$

$V_{042}$

well casing

3 tubing

borehole wall

7 annulus space

pulse-wave caliper mode

pulse-wave backscatter imaging mode, - internal tubing wall, - external tubing wall

pits

pits

pits

scaling

*Fig. 6a* imaging and doppler measurement modes with the present invention

EP 3 080 558 B1

Ultrasound Tr/Rx

Doppler measurement

Caliper logging

Backscatter imaging

Tubing fluid velocity f correction of annulus Doppler

tubing inner wall

tubing outer wall

Shear wave transm through tubing wall

tubing wall internal defects detection

Annulus fluid velocity

Colour doppler of particle movement / velocities in annulus

*Fig. 6b* imaging and doppler measurement modes with the present invention

Beam A

$042_n$   $042_1$

$041_n$   $041_1$

04

$041_1$   $041n$

$042_1$   $042_n$

Beam B

$041_1$   $041n$

$042_1$   $042_n$

Beam B

*Fig. 7b* Ultrasound beams A and B formed by selecting consecutive elements 041 and beam forming by phase delays

EP 3 080 558 B1

EP 3 080 558 B1

025 probe interface unit, 0252. flexprint cables

023 Tx/Rx module

0235 Tx beamformer module shapes signal field geometry to be transm.

024 switching module

0220 Main contr module with beamformer / switch control module (0239)

02201 Toolbus ctrl. module

10: toolbus

0233 Tx drivers 100 V analog channels

Transceiver Module

Tx Drivers/PA

Tx Beamformer Module

Tx Beamformer, Beam-A and -B Processor+DACs

Main Controller Module

Data Loading Interface

Toolbus Controller Module

Toolbus Connector

Tool bus

Beam-A

Switching module

Transducer Multiplexer

04:US tr.array, 041 US trans-ducers

Transducer

0232. Tx/Rx swithces

Tx/Rx Switches

$X_i$ ch

$X_i$ Tx ch.

$Y_i/X_i$ ch.

$X_i$ ch

Rx Beamformer Module

Rx Beamformer, Beam-A ADCs+processor

img compr unit

Image compression

(DLI)

(DLI)

Data Loading Interface

Memory Controller Module

High speed memory bus

0234: Rx analog front end pre-ampl

Rx Analog Front End

Rx Beamformer, Beam-B ADCs+processor

$X_i$ Rx ch.

Control signals.

0237 Rcvr. beamformer module ADC recvd channels

SPU, Beam-B

SPU, Beam-A Signal Processing Unit

Envelope

Envelope

TPa data TestPoint data. (Rawdata/debug data)

02202 H sp memory cont module to high speed bus to mem tool 200)

IQ demodulation & filtering 0221, 0223

Envelope 0225

Quantizer 0227

022 Signal pro-cessing unit

CPU/SPU doppler processing unit

Doppler buffer

PW doppler processing

Beam-B

Normal operation mode Beam B is pointing in opposite direction to Beam A (180°)

022D: Doppler pro-cessing unit

Color doppler processing

Output voltages

PSU module (Power Supply Unit)

Input voltage

Passenger line

*Fig. 7a* Block diagram for ultrasound tool

V042₁

V042ₙ

Center line of
selected elements
Beam A and Beam B

*Fig. 7c* Phase adjustments for beam forming
of signals in Tx beamformer module 0235 for forming constructive interference for
a given focus along the center line of consecutive selected elements, or at an azim. selected focus point

t

liner/casing-similar steel plate

F2

F2

tubing-similar steel plate

US transducer array, experim

F1

*Fig. 8b:* Side elevation and perspective view of laboratory experimental set-up of Fig. 8a

+23.0

−23.0 cm/s

−0 −5 −10 −15 −20

US transducer lab array

image of tubing-similar steel plate

image of bubbles in upward flow F2

F2 up

*Fig. 8d* Colour doppler view as if seen from above, ref Fig 8c, image turned 90 deg.

liner/casing-similar steel plate

laboratory set-up flow delimiting walls

F2

F2

F1

tubing-similar steel plate

US lab transducer array

*Fig. 8a* Perspective view of laboratory experimental set-up of underwater US transmission for Doppler measurements of flow behind steel plate.

liner/casing-similar steel plate

F2

tubing-similar steel plate

US transducer lab array

*Fig. 8c:* Top perspective view of laboratory experimental set-up of Figs. 8a and b, upward flow between steel plates

Flow (bubbles')
velocities

Upward flow
regime

Downward flow
regime

*Fig. 8e* Spectral Doppler time series
during start-up of flow F2
Above abscissa upward velocities.
Below abscissa downward velocities

tubing wall in well
under logging

wireline to surface

data sent on telemetry to SRO

relatively low-data bit
rate downhole modem
unit

downhole server (and
memory) logging
telemetry and toolbus
controller
10 "tool global" tool
bus connecting tool
sections below and
logging telemetry
controller

logging
tool string

logging tools with
logging sensors

: data sent on
toolbus to telemetry
server
high-speed high-capacity memory or
buffer mem

. 200. memory tool
section

high speed data bus

interfaces between HR logging tool and memory tool
0 high-resolution logging tool, with data
processing unit

HR sensors,
ultrasound transducers

*Fig. 9* HR tool connected to
dedicated memory/buffer tool and with
telemetry communication to surface

**Fig. 10a** lower part of an embodiment showing the memory tool and high-resolution ultrasound tool.

**Fig. 10b**

Generalized logging tool with comm. to surface via signal cable and with one (or more) high data volume producing tools (each) connected to a memory tool.

**Fig. 11a** Power transmission plots for ultrasound shear waves through a water-steel-water interface.

**Fig. 11b** Power transmission plots for ultrasound shear waves through an oil-steel-water interface.

EP 3 080 558 B1

## Fig. 12a
Downmixing of the In-phase and Quadrature signals.

## Fig. 12b
downmixing and clutter filtering of the downmixed signal.

Original spectrum

Downmixed spectrum

Filtered downmixed spectrum

up-mixed resulting spectrum

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4947683 A, Minear
- EP 0442188 A
- US 3603145 A
- WO 2010151136 A1

**Non-patent literature cited in the description**

- Ultrasonic testing of aerospace materials. *Practice NO. PT-TE-1422,* 1-3